# EUROPEAN PATENT APPLICATION

(11) **EP 1 357 546 A1**
(43) Date of publication of application: **29.10.2003**
(21) Application number: 01980980.5
(22) Date of filing: 02.11.2001
(51) Int. Cl.: G11B 7/007, G11B 7/005, G11B 11/105, G11B 20/10, G11B 7/24

(54) **OPTICAL DISK, RECORDING DEVICE FOR OPTICAL DISK, REPRODUCING DEVICE FOR OPTICAL DISK, METHOD OF REPRODUCING OPTICAL DISK AND METHOD OF PRODUCING OPTICAL DISK**

(30) Priority: 07.11.2000 JP 2000339196
(71) Applicant: MATSUSHITA ELECTRIC INDUSTRIAL CO., LTD., Kadoma-shi, Osaka 571-8501 (JP)
(72) Inventor: MIYATAKE, Norio, Kobe-shi, Hyogo 655-0007 (JP); HINO, Yasumori, Ikoma-shi, Nara 630-0112 (JP); ISHIBASHI, Kenzo, Moriguchi-shi, Osaka 570-0013 (JP)
(74) Representative: Schirdewahn, Jürgen
(86) International application number: JP0109651
(87) International publication number: WO02039434

(57) **Abstract**

An optical disc capable of recording preformatted data at high density is provided. The optical disc in accordance with the present invention has one or plural tracks disposed spirally or on concentric circles, wherein the above-mentioned track has first pre-pit areas or groove portions or inter-groove portions for control and also has a preformatted data recording area for recording preformatted data, and the above-mentioned preformatted data recording area has preformatted data formed of means other than pre-pits.

## Description

### TECHNICAL FIELD

The present invention relates to an optical disc, an optical disc recording apparatus, an optical disc reproducing apparatus, an optical disc reproducing method and an optical disc producing method.

### BACKGROUND ART

In recent years, optical discs and optical cards have been proposed and developed as media capable of optically recording and reproducing information. Among them, optical discs are receiving attention as media capable of reproducing or recording and reproducing large amount of information at high density.

As optical discs capable of recording and reproducing information, a magneto-optical (MO) disc or a phase change optical disc is generally known. In these optical discs, tracks formed concentrically or spirally are scanned by a laser beam, thereby to record and reproduce various kinds of data.

However, since an optical disc can record and reproduce large amount of digital data (for example, digital video signals and the like) at high speed, it has become necessary to prevent unauthorized duplication of data from the viewpoint of copyright protection.

Hence, as means for preventing unauthorized duplication using optical discs, writing information unique to each optical disc (different data for each optical disc) has been carried out at the time of production. The origin of the optical disc can be identified on the basis of the unique information.

As a result, unauthorized duplication of information can be prohibited, whereby copyright protection can be attained.

In addition, because of another purpose, for example, from the viewpoint of production control and the like, for example, writing a production lot number, a production date, etc. on each optical disc has also being carried out.

The above-mentioned unique information, production lot number, etc. must be unable to be rewritten by general optical disc recording and reproducing apparatuses widely distributed on the market. This is because if such information can be rewritten, a judgment as to whether an optical disc has been recorded legally or duplicated illegally cannot be made by using its unique information, for example, and the unique information becomes useless for the protection against unauthorized duplication.

In Japanese Laid-open Patent Application No. Hei 11-162031, a conventional optical disc is described. The conventional optical disc has a barcode-like wide preformatted data area on the inner circumference of the optical disc.

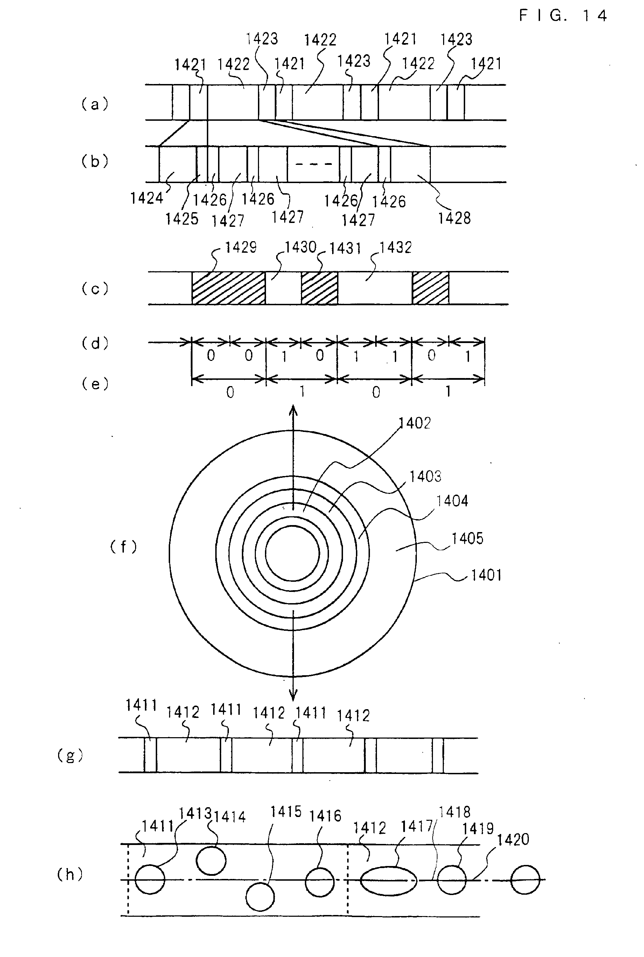

The portion (f) of FIG. 14 shows the overall configuration of the conventional recordable/reproducible optical disc (for example, a DVD-RAM disc or a magneto-optical disc).

The conventional optical disc shown in FIG. 14 is a magneto-optical disc.

A conventional optical disc 1401 has a lead-in area and a recording/reproduction data area 1405 capable of recording and reproducing data. In the case of a DVD-RAM disc, its lead-in area includes a first read-only data area 1403, a second read-only data area 1402 and a learning area 1404. In the DVD-RAM disc, for example, the second read-only data area 1402 is referred to as a BCA (Burst Cutting Area).

In the case of an MO disc, its lead-in area has only the first read-only area.

The first read-only data area 1403 has data formed of pre-pits. Since the pre-pits are formed by laser cutting the master disc of the optical disc, the data is common to all the optical discs made from the single master disc of the optical disc. The data is, for example, the number of the master disc of the optical disc, the optimal laser light intensity value for reading data recorded on the optical disc, etc.

The second read-only data area 1402 has data formed by destroying the reflection film of a recording film by using strong laser light (for example, YAG laser). Since the data is written by applying strong laser light to each optical disc, the data is data unique to each optical disc, for example, the production serial number, production lot number, encrypted data for duplication prevention, etc. of the optical disc.

Because of the properties of data to be recorded in the first read-only data area 1403 and the second read-only data area 1402, the data must be unable to be changed on the market.

Data to be recorded in the first read-only data area 1403 is data to be recorded by a disc manufacturer who produces optical discs, and data to be recorded in the second read-only data area 1402 is data to be recorded by the disc manufacturer who produces optical discs or by a dubbing company who records contents.

In addition, by providing pre-pits at the time of forming the master disc, the data to be recorded in the first read-only data area 1403 is recorded automatically on an optical disc by stamping, whereby no special cost for recording the data is necessary. On the other hand, the data to be recorded in the second read-only data area 1402 is recorded by applying laser light to each optical disc, whereby a high cost is necessary to record the data.

Because of the above-mentioned two reasons, the conventional optical disc, such as the DVD-RAM, has two separate read-only data areas.

The learning area 1404 is an area wherein the intensity of laser light during recording or reproduction is adjusted or learnt by applying laser light to the area when an optical disc is set on an optical disc apparatus.

The recording/reproduction data area 1405 is an area wherein ordinary data is recorded or reproduced.

The portion (g) of FIG. 14 shows the configuration of the first read-only data area in the case of an optical disc wherein tracking is carried out in conformity with the sample servo system and address data is entered in conformity with the distributed address system.

The first read-only data area 1403 formed on the inner circumference of the optical disc 1401 is divided into a plurality of segments.

Each segment has one clock, servo and address area 1411 and one data area 1412.

The portion (h) of FIG. 14 shows the configurations of the clock, servo and address area 1411 and the data area 1412.

The clock, servo and address area 1411 has four (or three) pre-pits 1413, 1414, 1415 and 1416.

The start pit 1413 is positioned at the beginning of each segment and is used to generate the timing of detecting the starting point of each segment and the timing of reading other pits (a wobble pit 1414 and the like).

The wobble pits 1414 and 1415 are sampling servo pits. The wobble pits 1414 and 1415 are disposed so as to be displaced to the left and right from the center of the track of the first read-only data area 1403. An optical disc apparatus for recording or reproducing the optical disc controls tracking so that the amount of reflected light from the wobble pits 1414 and 1415 are balanced with each other, whereby the optical pickup thereof can be positioned at the center of the track.

The address pit 1416 is provided in each one (or zero) segment and indicates a segment number and a track number. When a pre-pit is present at the position of the address pit 1416, data is 0; when no pre-pit is present, data is 1.

The addresses of the conventional optical disc shown in FIG. 14 conform to the distributed address format (described in Japanese Laid-open Patent Application No. Hei 11-021885 and Japanese Laid-open Patent Application No. Hei 11-329265) invented by the inventors of the present invention. The details thereof will be described later.

The data area 1412 has data (referred to as bi-phase mark) encoded in conformity with the phase encoding system.

The data encoded in conformity with the phase encoding system has a pit 1419 with a short length (a length of A/2 when the length of a one-bit data recording area is assumed to be A), a non-pit portion 1418 with the short length, a pit 1417 with a long length (a length of A) and a non-pit portion 1420 with the long length.

The phase encoding system will be described later.

The second read-only data area is disposed on the inner circumferential side of the first read-only data area, and stripe-like marks similar to barcodes are recorded as shown in the portion (c) of FIG. 14. The system for recording the marks conforms to the phase encoding system.

The width of the stripe in the radial direction is about 2 mm. Up to 188 bytes of data is written in the rotation direction of the disc, and its length does not exceed one turn of the disc.

As shown in the portion (a) of FIG. 14, the second read-only data area comprises a preamble field 1421, a data field 1422 and a post amble data field 1423.

As shown in the portion (b) of FIG. 14, in the preamble field 1421, a sync byte 1424 with a length of one byte and a preamble 1425 with a length of four bytes are recorded; in the data field 1422, a resync 1426 with a length of one byte and four bytes of data 1427 are recorded repeatedly; in the post amble data field 1423, the resync 1426 and a post amble 1428 are recorded.

The second read-only area has portions obtained by destroying the recording film by applying the YAG laser and normal portions (portions to which the YAG laser is not applied). In the case of a DVD disc, for example, this data area is referred to as a burst cutting area (hereafter referred to as "BCA").

The second read-only area has data (referred to as bi-phase mark) encoded in conformity with the phase encoding system.

The portion (c) of FIG. 14 shows data recorded in the second read-only area. The data encoded in conformity with the phase encoding system has a destroyed portion 1431 with a short length (a length of A/2 when the length of a one-bit data recording area is assumed to be A), a normal portion 1430 with the short length, a destroyed portion 1429 with a long length (a length of A) and a normal portion 1432 with the long length.

From the recorded mark shown in the portion (c) of FIG. 14, data shown in the portion (d) of FIG. 14 is obtained (A/2 is indicated as a time unit). 0 is obtained as data from destroyed portions, and 1 is obtained as data from normal portions.

By decoding the data shown in the portion (d) of FIG. 14, the data shown in the portion (e) of FIG. 14 is obtained (A is used as a time unit).

In the case of the conventional magneto-optical disc, data is recorded by magnetizing the recording film in the recording/reproduction data area 1405. The data recorded on the recording film is reproduced by applying laser light to the recording film, by receiving reflected light and by detecting the change of the polarizing angle of the reflected light.

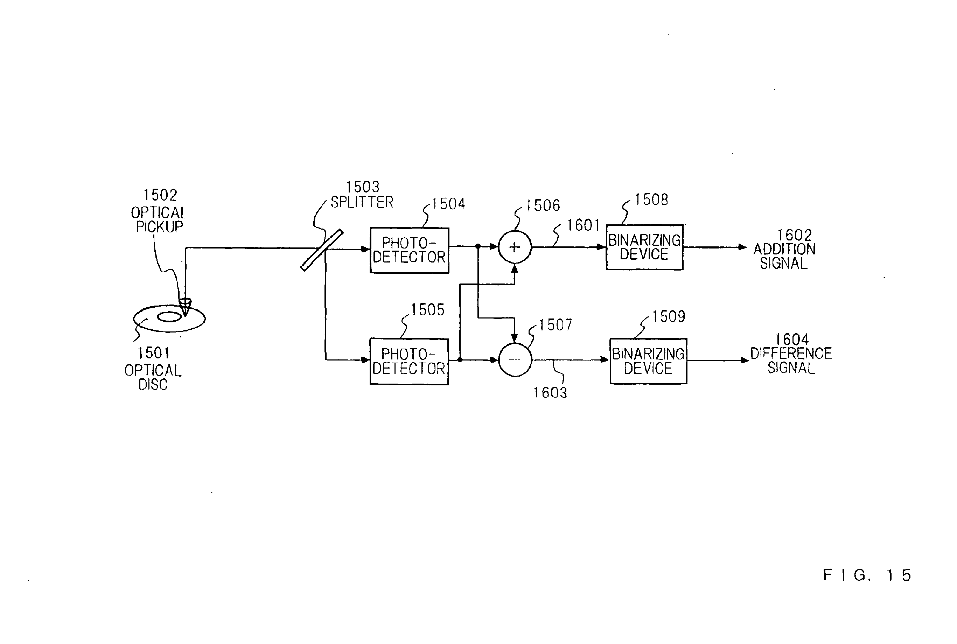

FIG. 15 shows the configuration of an optical disc apparatus for reproducing a magneto-optical disc, an optical disc shown in FIG. 14.

An optical pickup 1502 applies laser light for reproduction to an optical disc 1501 and receives reflected light.

The reflected light is split by a splitter 1503 into light components on two polarization planes. The respective light components are input to photo-detectors 1504 and 1505.

The photo-detectors 1504 and 1505 receive the light components of the respective polarization planes; the respective light components are converted into voltage signals in proportion to the light amount thereof, and the voltage signals are output.

The voltage signals are input to an adder 1506 and a subtracter 1507.

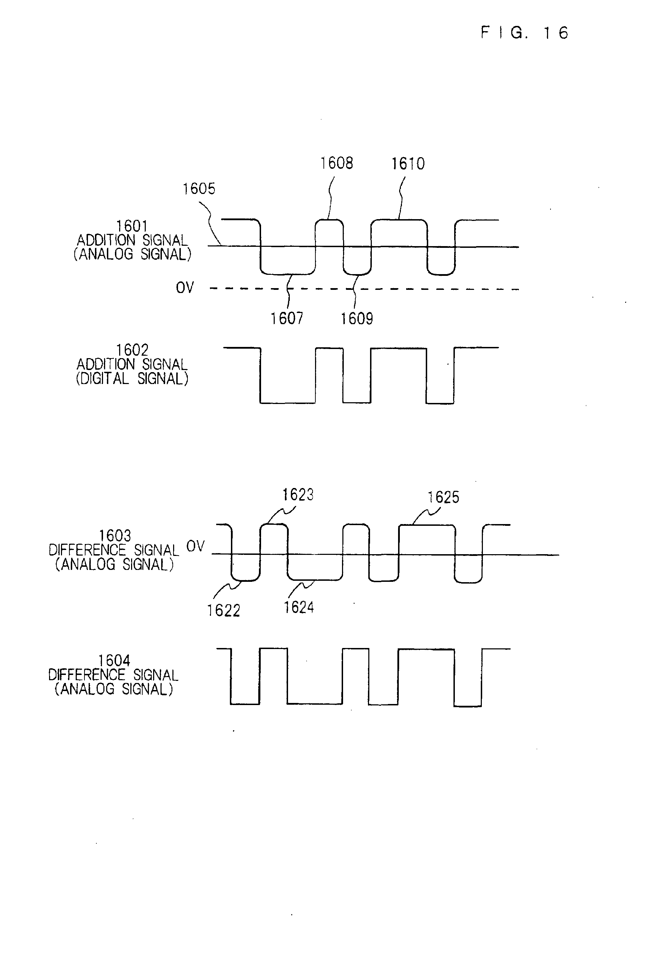

The adder 1506 receives the output signals of the photo-detectors 1504 and 1505, adds the received signals and outputs an addition signal (analog signal) 1601 (FIG. 16). The addition signal (analog signal) 1601 is proportional to the amount of the light received by the optical pickup. The addition signal (analog signal) 1601 is shown in FIG. 16.

The addition signal (analog signal) 1601 is input to a binarizing device 1508. The binarizing device 1508 binarizes the addition signal (analog signal) 1601 by using 1605 as a threshold value and outputs an addition signal (digital signal) 1602. The addition signal (digital signal) 1602 is shown in FIG. 16.

In the case when the optical pickup 1502 reads the data of the data area 1412 of the first read-only data area 1403, the amount of the reflected light from a portion with no pit is large, and the amount of the reflected light from a portion with a pit is very small.

Hence, in the addition signal (analog signal) 1601 shown in FIG. 16, an addition signal 1609 is obtained from the pit 1419 with the short length (the length of A/2) shown in the portion (h) of FIG. 14; an addition signal 1608 is obtained from the non-pit portion 1418 with the short length; an addition signal 1607 is obtained from the pit 1417 with the long length (the length of A); and an addition signal 1610 is obtained from the non-pit portion 1420 with the long length.

In the case when the optical pickup 1502 reads data of the second read-only data area 1402, the amount of the reflected light from a normal portion is large, and the amount of the reflected light from a portion obtained by destroying the recording film is very small.

Hence, in the addition signal (analog signal) 1601 of FIG. 16, an addition signal 1609 is obtained from the destroyed portion 1431 with the short length (the length of A/2) shown in the portion (a) of FIG. 14; an addition signal 1608 is obtained from the normal portion 1430 with the short length; an addition signal 1607 is obtained from the destroyed portion 1429 with the long length (the length of A); and an addition signal 1610 is obtained from the normal portion 1432 with the long length.

In the recording/reproduction data area 1405 (except areas wherein pits for servo control or addresses are present), the amount of reflected light is large regardless of the presence or absence of magnetization or the direction of magnetization. Hence, the addition signal 1601 is always high (has the same level as that of 1608 and 1610).

The subtracter 1507 receives the output signals of the photo-detectors 1504 and 1505, subtracts the received signals from each other and outputs a difference signal (analog signal) 1603 (FIG. 16). The difference signal (analog signal) 1603 is proportional to the difference between the light components from the polarization planes, included in the light received by the optical pickup 1502. The difference signal (analog signal) 1603 is shown in FIG. 16.

The difference signal (analog signal) 1603 is input to a binarizing device 1509. The binarizing device 1509 binarizes the difference signal (analog signal) 1603 by using 0 V as a threshold value and outputs a difference signal (digital signal) 1604. The difference signal (digital signal) 1604 is shown in FIG. 16.

In the case when the optical pickup 1502 reads the data of the recording/reproduction data area 1405 (except areas wherein pits for servo control or addresses are present), the polarity of the difference signal 1603 becomes positive (1623, 1625) or negative (1622, 1624) depending on the direction of magnetization.

By decoding the difference signal 1604, the recorded data can be reproduced.

In a portion wherein a pit is present in the data area 1412 of the first read-only data area 1403 and in a portion obtained by destroying the recording film of the second read-only data area 1402, the amount of input light is small and no magnetization is carried out, whereby the difference signal has a waveform similar to that of random noise.

When the signal read from the data area 1412 of the first read-only data area 1403 is compared with the signal read from the second read-only data area 1402 as described above, the waveforms of the addition signals and the difference signals are extremely similar, although the recording methods are completely different; it is thus difficult to make discrimination therebetween.

In the case of a disc having a relatively large diameter, 12 cm in diameter, just like a DVD-RAM disc, the surface area of the disc is sufficiently large, whereby the BCA can be disposed in the inner circumferential portion of the optical disc as described above.

For example, in the DVD-RAM disc, the area in the range from 22.3 mm to 23.5 mm in radius is the BCA. Since the optical disc itself is large, without making the optical head so small, it was possible to move the optical head to the radial position wherein the BCA is disposed and to read information recorded in the BCA.

However, in the case of a disc having a small diameter of about 50 mm, for example, the recording/reproduction area is required to be extended to the inner circumferential portion as much as possible, if the amount of recordable information is desired to be increased as much as possible in the limited surface area of the small disc. For this reason, providing the BCA occupying a large area in the inner circumferential portion of the small-diameter optical disc caused a problem of making the recording/reproduction area smaller by that amount of the area and significantly decreasing the recording capacity thereof.

However, there is strong market demands for recording both the data recorded in the first read-only data area and the data recorded in the second read-only data area even on a small-diameter disc; the amount of data required to be recorded rather tends to increase.

The present invention is intended to provide an optical disc capable of recording data in a read-only data area extremely smaller than the second read-only data area of the conventional disc.

In addition, the present invention is intended to provide an optical disc recording apparatus for recording data in the extremely small read-only data area of the optical disc having the extremely small read-only data area.

Furthermore, the present invention is intended to provide a method for producing the optical disc having the extremely small read-only data area in which data has been recorded.

Still further, the present invention is intended to provide an optical disc reproducing apparatus for reproducing the data recorded in the extremely small read-only data area of the optical disc.

Still further, the present invention is intended to provide an optical disc reproducing method for reproducing the data recorded in the extremely small read-only data area of the optical disc.

### DISCLOSURE OF INVENTION

In order to solve the above-mentioned problems, the present invention has the following configurations.

A first invention is an optical disc having one or plural tracks disposed spirally or on concentric circles, wherein the above-mentioned track has first pre-pit areas or groove portions or inter-groove portions for control and also has a preformatted data recording area for recording preformatted data, and the above-mentioned preformatted data recording area has preformatted data formed of means other than pre-pits.

A second invention is an optical disc in accordance with the first invention, wherein the above-mentioned track has segments divided into a plurality of areas, the above-mentioned segment has the above-mentioned first pre-pit area and the preformatted data recording area for recording preformatted data, the above-mentioned first pre-pit area has a pair of wobble pits disposed so as to be displaced to the left and right from the longitudinal direction of the above-mentioned track and at different positions in the longitudinal direction thereof.

In the conventional optical disc, preformatted data unique to each optical disc was recorded by destroying the recording film thereof in a barcode-like form. However, when writing the preformatted data by destroying the recording film, it was difficult to carry out phase control and tracking control by using pre-pits or grooves. A first reason for this is that pre-pits or the like serving as the reference for phase control or tracking control is in danger of being destroyed at the same time by destroying the recording film (the minimum destroyed area thereof is larger than the size of one pre-pit); a second reason is that it was difficult to make discrimination between a reproduction signal obtained from the portion obtained by destroying the recording film and a reproduction signal obtained from pre-pits serving as the reference for phase control or tracking control. Since both the reproduction signal obtained from the portion obtained by destroying the recording film and the reproduction signal obtained from pre-pits are signals based on the magnitude of the amount of the reflected light of laser light, it is impossible to discriminate reproduction signals recorded by the respective recording methods. For this reason, in the case when writing preformatted data by destroying the recording film, for example, the optical head was not subjected to phase control or tracking control (see the publication of Japanese Laid-open Patent Application No. Hei 11-162031). Hence, only a very small amount of data (188B, for example) was able to be recorded in a wide (about 2 mm) preformatted data area, like a BCA of a DVD medium.

The present invention attains an optical disc that can record preformatted data formed of means other than pre-pits while carrying out phase control (start pits or clock pits are used, for example) and/or tracking control (wobble pits or groove portions are used, for example). Hence, large information amount of preformatted data can be recorded in a preformatted data recording area on narrow tracks. The preformatted data can be reproduced properly by discriminating the reproduction signal from pre-pits for control from the reproduction signal of the preformatted data by using a reproducing apparatus or a reproducing method described later.

"Preformatted data area" is an area in which data that is difficult to be rewritten by optical disc apparatuses generally sold on the market is recorded. Generally, this area is an area in which data is recorded before a general user purchases the optical disc concerned. For example, the area is an area in which data formed of pre-pits is recorded by a disc factory and data formed of portions having vertical magnetic anisotropy and portions lacking vertical magnetic anisotropy is recorded by contents (movies, for example) dubbing companies.

"Pre-pits for control" are pre-pits required for controlling an optical disc. The pre-pits for control are start pits, wobble pits, address pits, etc., for example.

"Segment" is any given set of data, divided so as to be identified physically.

A third invention is an optical disc in accordance with the first invention, wherein the above-mentioned preformatted data area includes second pre-pit areas for recording preformatted data formed of pre-pits other than pre-pits for control and areas for recording preformatted data formed of means other than pre-pits, and at least one of the above-mentioned second pre-pit areas is adjacent to the above-mentioned areas for recording preformatted data formed of means other than pre-pits in the longitudinal direction of the preformatted data area.

Conventionally, when both of pre-pits and portions obtained by destroying the recording film were mixed as preformatted data on one track, there was a problem of making discrimination between them during reproduction difficult. This was because signal detection was carried out on the basis of the magnitude of the amount of the reflected light of laser light. For example, in the case of an optical disc provided with pre-pits for phase detection (pre-pits for control) and pre-pits serving as preformatted data on a one- turn track, a point serving as the reference for angular coordinates is detected generally on the basis of a constant area having no pre-pit. If data is recorded in this constant area having no pre-pit by destroying the recording film, it becomes impossible to recognize the point serving as the reference for angular coordinates. Hence, it was impossible to mix two kinds of preformatted data.

Therefore, for example, an area, formed of pre-pits, for recording data unique to a master disc and an area, formed of portions obtained by destroying the recording film or by other means, for recording data unique to each optical disc were provided on separate tracks. For example, a ring-shaped pre-pit area along one turn of the optical disc and an area for recording data formed of means other than the ring-shaped pre-pits along one turn of the optical disc were provided. Therefore, a large recording area was required.

The present invention can attain an optical disc for recording preformatted data at high density by providing two kinds of preformatted data (preformatted data formed of pre-pits and preformatted data formed of means other than pre-pits) so as to be adjacent on the same track.

A fourth invention is an optical disc in accordance with the first invention, wherein the above-mentioned preformatted data formed of means other than pre-pits is preformatted data formed of portions wherein the recording film has ordinary magnetic anisotropy and portions wherein the recording film has magnetic anisotropy smaller than the ordinary magnetic anisotropy.

The magneto-optical disc in accordance with the present invention has data based on the magnitude of magnetic anisotropy (the magnitude of the polarizing angle of the reflected light, including the presence/absence thereof) as data that cannot be rewritten by the user, for example.

The data based on the magnitude of magnetic anisotropy is data formed of portions wherein the recording film was degraded to the extent that its vertical magnetic anisotropy is lost and portions wherein the recording film was not degraded.

The data based on the magnitude of the vertical magnetic anisotropy of the recording film can be reproduced by a reproducing method different from the method for reproducing data formed of pre-pits or the like and based on the presence/absence of the amount of the reflected light; even if the recording film is degraded to the extent that the vertical magnetic anisotropy of the recording film is lost, the amount of the reflected light in the portions concerned is similar to that of the normal portions; hence, even if the data based on the vertical magnitude of magnetic anisotropy of the recording film is mixed with data formed of pre-pits or the like, respective data can be reproduced separately, without affecting the reading of data formed of pre-pits or the like. Hence, both of data can be mixed.

Conventionally, data that was unable to be rewritten by the user was recorded by providing portions that was obtained by destroying a reflective aluminum film by applying YAG laser to the recording film; however, the high power of the YAG laser was applied to the recording film, the circumference of a portion melted and destroyed by the heat of the YAG laser was raised in a ring shape owing to the surface tension of the melted aluminum, and the area of the destroyed portion was apt to increase, whereby the area of data per bit was very large. For example, data recorded in the BCA of a DVD has an average length of 3 µm.

Unlike this data, data based on the magnitude of the vertical magnetic anisotropy of the recording film in accordance with the present invention can be formed in a length of about 1 µm or less.

On the other hand, the intensity of the laser light for degrading the recording film to the extent that the vertical magnetic anisotropy of the recording film is lost can be attained by an ordinary laser, and the beam spot diameter of the laser light is similar (for example, a spot diameter of 0.6 µm) to that of an ordinary recording/reproducing laser (a laser for magnetizing the recording film or for drawing out reproduction signals).

Hence, in comparison with the conventional method for recording data by providing portions obtained by destroying the recording film, the present invention can decrease the area of data per bit.

With the present invention, the above-mentioned data formed of means other than pre-pits can be recorded in the preformatted data area. Since it is difficult to restore the portions obtained by degrading the recording film, there is a very low possibility that the preformatted data is changed on the market. The present invention can attain a preformatted data area having a high recording density.

The optical disc in accordance with the present invention has data formed of pre-pits mixed with data based on the magnitude of magnetic anisotropy in one recording area, as data that cannot be rewritten by the user without authorization, for example.

The data formed of pre-pits can be detected depending on the difference in the amount of reflected light. The data based on the magnitude of the polarizing angle of the reflected light can be detected on the basis of the difference in the absolute value of the polarizing angle of reflected light (the reproducing method of the present invention). The two types of data are reproduced by reproducing methods different from each other; in addition, by using the detection method for one type of data, the other type of data is not reproduced; therefore, even if the two types of data are mixed in the same recording area, each type of data can be identified when a reproduction signal is read by an optical disc apparatus.

As described above, it is not necessary to provide a special-purpose recording area for recording the data based on the magnitude of magnetic anisotropy; for example, this data can be mixed in the same recording area in which data based on the difference in the amount of reflected light (for example, data formed of pre-pits) has been recorded.

Hence, the present invention has an action of attaining an optical disc having a small recording area for recording data that cannot be rewritten by the user and of attaining an optical disc having a wider recording area in which the user can carry out recording and reproduction as desired (the user can record more amount of data), for example.

By providing pre-pits for phase control or tracking control and by controlling the optical pickup by using the reproduction signal of the pre-pits, it is possible to attain an optical disc for recording data based on the magnitude of magnetic anisotropy on narrow tracks at high density. This is because the reproduction signal of the pre-pits can easily be discriminated from the data based on the magnitude of magnetic anisotropy during reproduction.

"Data based on the magnitude of magnetic anisotropy" is, for example, data formed of portions wherein vertically polarized light is applied to a disc and the polarizing angle of the reflected light thereof is changed (portions having magnetic anisotropy) and portions wherein the reflected light having a slight change in polarizing angle is generated (portions having low magnetic anisotropy).

For example, the data is formed of portions for generating reflected light having a change in magnetic anisotropy and portions for generating reflected light having only a slight change in magnetic anisotropy to the extent that discrimination is possible from the portions for generating reflected light having the change in magnetic anisotropy.

"Reflected light having only a slight change in magnetic anisotropy to the extent that discrimination is possible" is reflected light in which, in comparison with the level of the detection signal of the polarized light component in the portions wherein the polarizing angle of the reflected light has changed, the level of the detection signal of the polarized light component has a low level (for example, 1/2 or less) to the extent that discrimination is possible depending on a constant threshold value at high reliability.

Recording data based on the difference in the absolute value of the polarizing angle of reflected light (data based on the magnitude of the polarizing angle of reflected light) together with data based on the difference in the amount of reflected light in a recording area includes, as described later, disposing data based on the difference in the absolute value of the polarizing angle of reflected light between the recording areas for two pieces of data based on the difference in the amount of reflected light, for example, and also includes recording data based on the difference in the absolute value of the polarizing angle of reflected light and data based on the difference in the amount of reflected light in the same recording area.

"Portions wherein the recording film has magnetic anisotropy smaller than ordinary magnetic anisotropy" are portions wherein the recording film was degraded by laser light, for example, and "portions having ordinary magnetic anisotropy" are portions not degraded.

A fifth invention is an optical disc in accordance with the second invention, wherein another segment mentioned above further has a third pre-pit area and a data recording area for writing data, and the above-mentioned third pre-pit area has the same structure as that of the above-mentioned first pre-pit area.

In the conventional optical disc, for example, the control-use structure (for example, a pre-pit area) of an area wherein ordinary data (data that was recorded or reproduced by the user) was recorded was different from the control-use structure (for example, data having the shape of a wide barcode and having no pre-pit) of an area wherein preformatted data was recorded. Hence, a recording apparatus or a reproducing apparatus was required to control its laser beam by using a method being different depending on whether the recording area was the area wherein ordinary data had been recorded or the area wherein preformatted data had been recorded. For example, in the area wherein ordinary data had been recorded, tracking control was carried out by using wobble pits, and phase control was carried out by using start pits; in the area wherein preformatted data had been recorded, the optical pickup was placed at a predetermined position, and speed control was carried out for the optical disc (tracking control and phase control were not carried out). Hence, the control section of the recording apparatus or the like was complicated, thereby resulting in high cost.

In the optical disc in accordance with the present invention, an area wherein ordinary data has been recorded and an area wherein preformatted data has been recorded have the same control-use pre-pit area (having wobble pits and the like, for example); hence, the recording apparatus or the like should only control its laser beam by using the same method in both of the areas. The present invention has an action of attaining an optical disc capable of carrying out recording or reproduction by using a disc apparatus having a control section that is simple and inexpensive.

A sixth invention is an optical disc in accordance with the third invention, wherein at least two areas disposed between the above-mentioned second pre-pit areas being adjacent thereto have different lengths, and an area for recording the above-mentioned preformatted data formed of means other than pre-pits is provided at least in the area having the longest length and disposed between the above-mentioned second pre-pit areas being adjacent thereto.

In the optical disc in accordance with the present invention, a ring-shaped preformatted data area along one turn of the optical disc is provided, and pre-pit areas divided into a plurality of segments are provided in this area, for example.

For example, the lengths of all the areas disposed between the pre-pit areas being adjacent thereto are not set at the same length; the length of one area disposed between the pre-pit areas being adjacent thereto is made longer than the length of the other area disposed between the pre-pit areas being adjacent thereto.

By detecting the long area disposed between the pre-pit areas being adjacent thereto and then by specifying the address of each segment by using this area as a starting point (as the reference point of angular coordinates), the optical pickup can easily gain access to the segment having a specific address.

In the conventional optical disc, no data was recorded in such an area disposed between the pre-pit areas being adjacent thereto.

However, in the case of a small-diameter optical disc strongly demanded to have a larger data recording capacity, even a slight amount, leaving a long area unrecorded is against such a demand. In the optical disc in accordance with the present invention, data formed of means other than pre-pits is recorded in the long area disposed between the pre-pit areas being adjacent thereto.

By recording data formed of means other than pre-pits in the long area disposed between the pre-pit areas being adjacent thereto (preferably, by recording data formed of portions having vertical magnetic anisotropy and portions lacking vertical magnetic anisotropy and by reproducing the data by using the reproducing method in accordance with the present invention) in the long area disposed between the pre-pit areas being adjacent thereto, the data recorded in the long area disposed between the pre-pit areas being adjacent thereto does not interfere with the detection of the long area disposed between the pre-pit areas being adjacent thereto.

For this reason, the present invention has, for example, an action of attaining an optical disc having a small recording area for recording data that cannot be rewritten by the user without authorization and of attaining an optical disc having a wider recording area (capable of recording more amount of data) wherein the user can carry out recording and reproduction as desired.

It is also possible to record data formed of means other than pre-pits in a short area disposed between the pre-pit areas being adjacent thereto other than the long area disposed between the pre-pit areas being adjacent thereto.

"Length" is a length measured along the longitudinal direction of the pre-pit area.

A seventh invention is an optical disc in accordance with the first invention, wherein the above-mentioned preformatted data area has preformatted data formed of pre-pits and preformatted data formed of means other than pre-pits, and at least part of the area having the above-mentioned preformatted data formed of pre-pits is overlapped with the area having the above-mentioned preformatted data formed of means other than pre-pits.

In the optical disc in accordance with the present invention, just as in the case of the embodiment, for example, part of an area is an area having data formed of pre-pits and also having data formed of means other than pre-pits.

With the present invention, large amount of data can be recorded in a constant recording area on the optical disc.

In addition, the present invention has, for example, an action of attaining an optical disc having a small recording area for recording data that cannot be rewritten by the user without authorization and of attaining an optical disc having a wider recording area (capable of recording more amount of data) wherein the user can carry out recording and reproduction as desired.

An eighth invention is an optical disc in accordance with the third or fourth invention, wherein the above-mentioned preformatted data formed of means other than pre-pits is recorded in portions not provided with pre-pits in the above-mentioned area having data formed of pre-pits.

In the seventh invention, data formed of pre-pits and data formed of means other than pre-pits can be recorded in the same recording area so as to be overlapped, whereby high recording density can be attained.

However, the reflected light in the portions provided with pre-pits is very weak; hence, for example, even if data based on the difference in the absolute value of the polarizing angle of the reflected light (data formed of means other than pre-pits) is recorded in the portions provided with pre-pits, it is difficult to reproduce the data.

Hence, in the optical disc in accordance with the present invention, the data formed of means other than pre-pits is recorded in portions not provided with pre-pits in the above-mentioned area having data formed of pre-pits.

With the present invention, large amount of data can be recorded so as to be reproducible in a constant recording area on the optical disc.

In addition, the present invention has, for example, an action of attaining an optical disc having a small recording area for recording data that cannot be rewritten by the user without authorization and of attaining an optical disc having a wider recording area (capable of recording more amount of data) wherein the user can carry out recording and reproduction as desired.

Each piece of data formed of pre-pits is 1-bit of data recorded depending on whether a pre-pit is actually present or not in a portion wherein a pre-pit can be present. Hence, "a portion not provided with pre-pits in a pre-pit area" is a portion wherein pre-pits can be present, and includes a portion having no pre-pit in reality.

Furthermore, in the case when pre-pits are recorded in conformity with the phase modulation system, for example, a portion disposed between adjacent pre-pits is also included.

A ninth invention is an optical disc in accordance with the third or fourth invention, wherein the mark length of each piece of the above-mentioned preformatted data formed of pre-pits is different from the mark length of each piece of the above-mentioned preformatted data formed of means other than pre-pits.

As described above, the reflected light in the portions provided with pre-pits is very weak; hence, for example, even if data based on the difference in the absolute value of the polarizing angle of the reflected light (data formed of means other than pre-pits) is recorded in portions provided with pre-pits, it is difficult to reproduce the data.

Therefore, in the optical disc in accordance with the present invention, the mark length of each piece of the above-mentioned data formed of pre-pits is made different from the mark length of each piece of the above-mentioned data formed of means other than pre-pits.

Hence, even if no reflected light is obtained from a portion having a pre-pit, each piece of data can be reproduced.

With the present invention, large amount of data can be recorded so as to be reproducible in a constant recording area on the optical disc.

In addition, the present invention has, for example, an action of attaining an optical disc having a small recording area for recording data that cannot be rewritten by the user without authorization and of attaining an optical disc having a wider recording area (capable of recording more amount of data) wherein the user can carry out recording and reproduction as desired.

When data encoded in conformity with the phase encoding system is recorded, just as in the case of the embodiment, it is preferable that the mark length of each piece of the above-mentioned data formed of pre-pits has at least four times the mark length of each piece of the above-mentioned data formed of means other than pre-pits, or that the mark length of each piece of the above-mentioned data formed of means other than pre-pits has at least four times the mark length of each piece of the above-mentioned data formed of pre-pits.

Hence, each piece of data can be reproduced easily.

"Mark length" is the length of a piece of data measured in the longitudinal direction of the preformatted data area.

By applying laser light having a constant range to the recording film of the optical disc, the recording film can be degraded to the extent that the vertical magnetic anisotropy of the recording film is reduced so as to be discriminable from other portions (for example, to the extent that the change in the polarizing angle of the reflected light is 1/2 or less of the change in the polarizing angle of the reflected light in other portions, including an extent wherein the vertical magnetic anisotropy is lost), although the amount of the reflected light on the recording film is not changed.

For example, by providing portions wherein the vertical magnetic anisotropy of the recording film is lost (the polarizing angle of the reflected light in the portions is not changed by magnetization) and normal portions (wherein the vertical magnetic anisotropy of the recording film is present, and the polarizing angle of the reflected light in the portions is changed by magnetization) on the optical disc, data based on the magnitude of the polarizing angle of light can be recorded.

In addition, since vertical magnetic anisotropy cannot be restored from portions lacking vertical magnetic anisotropy, it is extremely difficult to rewrite data recorded by this method. Hence, data that cannot be rewritten by the user (for example, the serial number and the like of the optical disc) is suited as data that is recorded on the optical disc on the basis of the magnitude of the vertical magnetic anisotropy of the recording film.

A tenth invention is an optical disc in accordance with the first invention, wherein the above-mentioned preformatted data area is provided in the vicinity of at least one of the inner circumferential side and the outer circumferential side of the optical disc and has at least one- turn length of the optical disc.

In the case when starting recording or reproduction on an optical disc, a disc apparatus first gains access to a preformatted data recording area (positioned in the inner circumference or the outer circumference) positioned nearly in the leading portion of the optical disc, obtains information (preformatted data) unique to the optical disc and gains access to the leading address of a desired data recording area, thereby being able to promptly start recording or reproduction. When the length of the preformatted data recording area is a one- turn length of the optical disc or more, it is easy to detect the leading position of the preformatted data. For example, the longest period during which no reproduction signal is delivered from pre-pits is detected, and the reference point of angular coordinates is detected on the basis of the longest period.

An 11th invention is an optical disc in accordance with the first invention, wherein the above-mentioned preformatted data formed of means other than pre-pits includes information unique to the optical disc. For example, data based on the magnitude of magnetic anisotropy is suited as information unique to each optical disc.

A 12th invention is an optical disc in accordance with the first invention, wherein an area for recording the above-mentioned preformatted data formed of means other than pre-pits comprises only a recording film having magnetic anisotropy smaller than that of the recording film of the ordinary data recording area.

It is assumed that an area for recording data formed of means other than pre-pits in the preformatted data area of an optical disc sold to a general user is in a blank state at the time of shipment. If a person attempting to carry out unauthorized duplication records the same data as that of an authorized optical disc in the area for recording data formed of means other than pre-pits on an optical disc used for unauthorized duplication, it is difficult to make discrimination between the authorized optical disc and the optical disc obtained by the unauthorized duplication.

Hence, in the optical disc in accordance with the present invention, the recording film of the area for recording data formed of means other than pre-pits is degraded wholly. Although normal portions can be degraded, it is very difficult to restore portions degraded once; hence, the present invention has an action capable of attaining an optical disc that can prevent unauthorized duplication.

A 13th invention is an optical disc in accordance with the third invention, wherein the above-mentioned preformatted data formed of means other than pre-pits is data conforming to the phase encoding system.

In a system for recording data formed of portions obtained by degrading the recording film and normal portions, it is extremely difficult to restore the portions obtained by degrading the recording film to a normal state, but it is easy to degrade the normal portions. In the case of a bi-phase mark (data conforming to the phase encoding system), data must be changed at least at both ends of the mark (1 bit of record data), whereby data cannot be changed even if the normal portions are simply degraded.

In addition, it is easy to generate a clock from a reproduction signal; in the case when data formed of pre-pits is superimposed on data formed of means other than pre-pits, data separation is done easily.

Furthermore, the bi-phase mark has characteristics unique thereto, such as a characteristic capable of generating a clock for reproduction from data itself.

Hence, the present invention has an action capable of attaining an optical disc, data recorded on which is hard to change.

A 14th invention is an optical disc in accordance with the third invention, wherein the above-mentioned preformatted data formed of pre-pits is data conforming to the phase modulation system.

When data formed of pre-pits is data conforming to the phase modulation system, the data formed of pre-pits can be used to generate a clock, and data formed of means other than pre-pits can be recorded in portions not provided with pre-pits.

The present invention has an action capable of attaining an optical disc having very high recording density.

A 15th invention is a recording apparatus for an optical disc having one or plural tracks disposed spirally or on concentric circles, comprising a control section for applying laser light to wobble pits, grooves or inter-grooves formed in the above-mentioned optical disc and for carrying out the phase control or tracking control of an optical pickup on the basis of the amount of reflected light, and a recording section for recording information on the above-mentioned tracks by applying laser light while carrying out the phase control or tracking control of the optical pickup using the above-mentioned control section, thereby degrading the recording film of the optical disc to the extent that reflected light is obtained therefrom and magnetic anisotropy becomes smaller than ordinary magnetic anisotropy.

With the optical disc recording apparatus in accordance with the present invention, by controlling the optical pickup, data based on the magnitude of the magnetic anisotropy of the recording film (the magnitude of the polarized light of the reflected light) can be recorded at high density on narrow tracks.

The present invention has an action capable of attaining an optical disc recording apparatus capable of producing an optical disc having high recording density as described above.

"Recording apparatus" includes a recording-only apparatus and a recording/reproducing apparatus.

"Phase control or tracking control" may include either or both of them.

A 16th invention is an optical disc recording apparatus in accordance with the 15th invention, wherein the intensity of the above-mentioned laser light for degrading the recording film is intensity capable of raising the temperature of the recording film to 680°C or more and 1300°C or less.

With the present invention, the recording film of the optical disc can be degraded to the extent that its reflectivity is not changed but its vertical magnetic anisotropy is lost.

It is preferable that the temperature of the recording film is 750°C or more and 1250°C or less.

It is further preferable that the temperature of the recording film is 750°C or more and 950°C or less.

"Intensity capable of raising the temperature of the recording film to 680°C or more and 1300°C or less" means intensity capable of raising the temperature of any given point on the recording film to this temperature range.

The intensity of the laser is determined on the basis of the above-mentioned temperature condition of the recording film, the rotation speed (the linear speed of the laser application point) of the optical disc during recording or the like.

A 17th invention is an optical disc producing method comprising an optical disc substrate forming step for forming an optical disc substrate having pre-pits or grooves for control, a recording film forming step for forming a recording film on the above-mentioned optical disc substrate, and a recording step of recording information by applying laser light, thereby degrading the recording film of the above-mentioned optical disc to the extent that magnetic anisotropy becomes smaller than ordinary magnetic anisotropy while applying laser light to wobble pits, grooves or inter-grooves formed in the above-mentioned optical disc and carrying out the phase control or tracking control of an optical pickup on the basis of the amount of the reflected light thereof.

With the optical disc producing method in accordance with the present invention, by controlling the optical pickup, data based on the magnitude of the magnetic anisotropy of the recording film (the magnitude of the polarized light of the reflected light) can be recorded at high density on narrow tracks.

The present invention has an action capable of attaining an optical disc producing method capable of producing an optical disc having high recording density as described above by applying the present invention to, for example, an optical disc's serial number writing process or the like in a production process.

An 18th invention is an optical disc producing method in accordance with the 17th invention, wherein the intensity of the above-mentioned laser light for degrading the recording film is intensity capable of raising the temperature of the recording film to 680°C or more and 1300°C or less.

With the present invention, the recording film of the optical disc can be degraded to the extent that its reflectivity is not changed but its vertical magnetic anisotropy is lost.

A 19th invention is an optical disc producing method in accordance with the 17th invention,. wherein information unique to the optical disc is recorded at the above-mentioned recording step. For example, data based on the magnitude of magnetic anisotropy is suited as the information unique to each optical disc.

A 20th invention is an optical disc producing method in accordance with the 17th invention, wherein data formed of pre-pits is further recorded at the above-mentioned optical disc substrate forming step. For example, information unique to a master disc or the like is recorded as data formed of pre-pits, and information unique to each optical disc is recorded as data based on the magnitude of magnetic anisotropy. Hence, such preformatted data can be recorded on the optical disc efficiently.

A 21st invention is an optical disc reproducing apparatus comprising a splitter for splitting reflected light from an optical disc into two polarization-plane light components different from each other, polarized light component detection sections for detecting the above-mentioned two polarization-plane light components different from each other and for outputting two detection signals, a difference detection section for receiving the above-mentioned two detection signals and for outputting the difference therebetween, and binarizing device for binarizing the absolute value of the above-mentioned difference on the basis of a threshold value in a condition that the level of the addition signal of the above-mentioned two detection signals is a constant value or more or in a condition of being within the period of a window signal generated on the basis of a reproduction signal of pre-pits.

A 27th invention is an optical disc reproducing method comprising a splitting step for splitting reflected light from an optical disc into two polarization-plane light components different from each other and for detecting the respective light components, a difference detecting step for outputting difference between the above-mentioned two light components detected, and a binarizing step for binarizing the absolute value of the above-mentioned difference on the basis of a threshold value in a condition that the level of the addition signal of the above-mentioned two detection signals is a constant value or more or in a condition of being within the period of a window signal generated on the basis of a reproduction signal of pre-pits.

The publication of Japanese Laid-open Patent Application No. Hei 11-162031 describes a method wherein preformatted data based on the magnitude of magnetic anisotropy is recorded on an optical disc, linearly polarized light is applied to the portion wherein the preformatted data has been recorded and the data is reproduced on the basis of the rotation angle of the reflected light therefrom. However, no specific method was described. Ordinary data is reproduced by obtaining the two different polarization-plane components of the reflected light from the optical disc and by detecting the difference therebetween; however, there is an idea wherein one polarization-plane component of the reflected light is obtained and the preformatted data is reproduced on the basis of the change of its level. However, in such a method, a reproduction signal based on the magnitude of the magnetic anisotropy of the recording film and a reproduction signal based on the presence/absence of pre-pits are read simultaneously (the signals are similar to each other in that they are detected on the basis of the magnitude of the amount of the reflected light). Therefore, it was difficult to read the preformatted data recorded at high density (data based on the magnitude of the magnetic anisotropy of the recording film) while controlling the optical pickup by using a reproduction signal of pre-pits for control.

In the present invention, linearly polarized light is applied to an optical disc, two different polarization-plane components of reflected light are obtained, and the preformatted data is reproduced on the basis of the magnitude of the absolute value of the difference therebetween in the condition that the level of the addition signal of the two detection signals is a constant value or more or in a condition of being within the period of the window signal generated on the basis of the reproduction signal of pre-pits. Hence, the preformatted data can be reproduced and can be binarized properly. In addition, with this method, the reproduction signal from pre-pits can be eliminated, whereby the preformatted data recorded at high density (data based on the magnitude of the magnetic anisotropy of the recording film) can be read while controlling the optical pickup by using the reproduction signal of pre-pits for control.

"Reproducing apparatus" includes a reproducing-only apparatus and a recording/reproducing apparatus.

"Binarizing the absolute value of the above-mentioned difference" means binarization on the basis of the magnitude of vertical magnetic anisotropy; data on the basis of the magnetization direction in portions having vertical magnetic anisotropy (ordinary recordable/reproducible data recorded on a magneto-optical disc) is not included.

"Binarizing the absolute value of the above-mentioned difference" means carrying out division into two cases, that is, a case wherein an input voltage is closer to 0 V than a threshold value and a case wherein the input voltage is farther away from 0 V than the threshold value, and converting the respective cases into two values.

"Binarizing the absolute value of the above-mentioned difference" is an expression for clearly indicating the difference from the binarization of the difference, i.e. ordinary record data, on the basis of the difference in the direction of magnetization, and does not mean obtaining an absolute value and carrying out binarization in a mathematically strict sense. It should be interpreted in a broad sense. For example, a positive threshold value (a threshold value at the time when a difference signal is positive) is not required to be the same as a negative threshold value (a threshold value at the time when a difference signal is negative).

A 22nd invention is an optical disc reproducing apparatus in accordance with the 21st invention, further comprising a light amount detection section for outputting the addition signal of the above-mentioned two detection signals.

A 30th invention is an optical disc reproducing method in accordance with the 27th invention, further comprising a light amount detecting step for outputting the addition signal of the above-mentioned two detection signals.

For example, information of pre-pits is detected by the addition signal, and data based on the magnitude of the magnetic anisotropy of the recording film is detected by the 21st invention. Hence, information based on two kinds of recording methods can be used.

A 23rd invention is an optical disc reproducing apparatus in accordance with the 22nd invention, comprising a window signal generating section for generating a window signal based on that the output level of the above-mentioned addition signal is a constant value or more, and a selecting section for selecting an effective difference by using the above-mentioned window signal.

A 31st invention is an optical disc reproducing method in accordance with the 30th invention, comprising a window signal generating step for generating a window signal based on that the output level of the above-mentioned addition signal is a constant value or more, and a selecting step for selecting an effective difference by using the above-mentioned window signal.

The present invention is effective, for example, in the case when a pre-pit area is overlapped with a data area wherein data formed of means other than pre-pits is recorded.

When the output level of the addition signal is a constant value or less (for example, in portions provided with pre-pits), the S/N ratio of a reproduction signal is very low, whereby the reliability of the data is low. Hence, in the present invention, data reading is carried out on the basis of differences in portions wherein the output level of the addition signal is a constant value or less.

Hence, the 23rd invention has an action capable of attaining an optical disc reproducing apparatus capable of obtaining a highly reliable reproduction signal even in the case when an optical disc having a pre-pit area overlapped with a data area wherein data formed of means other than pre-pits is recorded, for example, is reproduced.

Similarly, the 31st invention has an action capable of attaining an optical disc reproducing method capable of obtaining a highly reliable reproduction signal even in the case when an optical disc having a pre-pit area overlapped with a data area wherein data formed of means other than pre-pits is recorded, for example, is reproduced.

A 24th invention is an optical disc reproducing apparatus in accordance with the 21st invention, further comprising a decoder conforming to the phase encoding system for receiving and decoding the output signals of the above-mentioned binarizing device.

The present invention has an action capable of attaining a reproducing apparatus capable of reproducing data from an optical disc on which data conforming to the phase encoding system, hard to be changed, has been recorded.

A 25th invention is an optical disc reproducing apparatus in accordance with the 21st invention, further comprising a copy guard section for releasing a copy guard in the case when all the output signals of the above-mentioned binarizing device, based on reflected light from a specific area on an optical disc, are not more than the above-mentioned constant threshold value.

A 28th invention is an optical disc reproducing method in accordance with the 27th invention, further comprising a step for releasing a copy guard in the case when all the output signals at the above-mentioned binarizing step, based on reflected light from a specific area on an optical disc, are not more than the above-mentioned constant threshold value.

As described above, in the case when data formed of portions obtained by degrading the recording film and normal portions is recorded on an optical disc, it is extremely difficult to restore the portions obtained by degrading the recording film to a normal state, but it is easy to degrade the normal portions.

Hence, it is preferable that the recording film at a specified area of an optical disc to be sold to a general user is degraded wholly.

Therefore, in the case when this kind of optical disc is reproduced, it is generally judged that readable data has not been recorded any more in the specific area (since the whole area is regarded so as to correspond to 0 (or 1), data for a clock is not present; if data, such as ECC, is included, the value of the ECC becomes abnormal).

However, in the optical disc reproducing apparatus in accordance with the present invention, if a specific area has been degraded wholly, the copy guard section releases its copy guard.

Usually, the optical disc apparatus reproduces the clock of the specific area, reads data, such as ECC, on the basis of the clock, and outputs data obtained by reading.

If the specific area has been degraded wholly (data is 0 or 1), the copy guard section carries out an action for releasing the copy guard, completely different from the action for reading ordinary data, such as clock reproduction.

"Specific area of an optical disc" is any given area.

A 26th invention is an optical disc reproducing apparatus in accordance with the 21st invention, further comprising a control section for carrying out the phase control or tracking control of an optical pickup on the basis of the above-mentioned addition signal, wherein the above-mentioned binarizing device outputs data while the above-mentioned control section controls the optical pickup.

A 32nd invention is an optical disc reproducing method in accordance with the 27th invention, further comprising a tracking control step for carrying out the phase control or tracking control of an optical pickup on the basis of the above-mentioned addition signal, wherein data is output at the above-mentioned binarizing step while the phase control or tracking control of the optical pickup is carried out at the above-mentioned tracking control step.

The present invention has an action capable of attaining a reproducing apparatus and a reproducing method capable of reproducing data from an optical disc on which data based on the magnitude of the magnetic anisotropy of the recording film (based on the magnitude of the polarizing light of reflected light) is recorded at high density on narrow tracks by controlling the optical pickup.

The present invention is characterized in that, when reproducing data formed of portions lacking vertical magnetic anisotropy and normal portions, constant data (preferably, data being wholly 0 or 1) is first recorded once in the area wherein the data to be reproduced has been recorded.

Hence, the data can be reproduced on the basis of the difference between the light components on the respective polarization planes or the absolute value of the difference.

A 29th invention is an optical disc reproducing method in accordance with the 27th invention, further comprising a writing step for writing constant data on an optical disc, wherein, at the above-mentioned split step, reflected light from a portion in which data has been written at the above-mentioned writing step is received, the reflected light is split into two polarization-plane light components different from each other, and the respective light components are detected.

If the recording area for data formed of portions lacking vertical magnetic anisotropy and normal portions is not magnetized at all, no data can be read; therefore, constant data (preferably, data being wholly 0 or 1) is recorded first in the present invention.

In addition, by recording data being wholly 0 or 1 first, the data to be reproduced can be reproduced by using the reproduction section for ordinary data (data based on the change of the direction of magnetization, which is read by using the change in the polarizing angle of reproduced light), without changing the reproduction section.

Furthermore, even if ordinary data has been recorded on the optical disc, the ordinary data having been recorded is erased by recording the constant data; therefore, the ordinary data is not reproduced mistakenly as data formed of portions lacking vertical magnetic anisotropy or the like.

The present invention has an action capable of attaining an inexpensive optical disc reproducing apparatus capable of securely reproducing data formed of portions lacking vertical magnetic anisotropy and normal portions.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF DRAWINGS

FIG. 1 is a view showing the structure of a recordable/reproducible optical disc in accordance with Embodiment 1 and waveforms in various portions thereof;
FIG. 2 is a block diagram of an optical disc reproducing apparatus in accordance with Embodiment 1;
FIG. 3 is a view showing waveforms in various portions of the optical disc reproducing apparatus in accordance with Embodiment 1;
FIG. 4 is a view showing the phase encoding system and the phase modulation system;
FIG. 5 is a view showing an optical disc producing method in accordance with Embodiment 1;
FIG. 6 is a view showing the structure of a recordable/reproducible optical disc in accordance with Embodiment 2 and waveforms in various portions thereof;
FIG. 7 is a block diagram of an optical disc reproducing apparatus in accordance with Embodiment 2;
FIG. 8 is a view showing the structure of a recordable/reproducible optical disc in accordance with Embodiment 3 and waveforms in various portions thereof;
FIG. 9 is a block diagram of an optical disc reproducing apparatus in accordance with Embodiment 3;
FIG. 10 is a view showing the structure of a recordable/reproducible optical disc in accordance with Embodiment 4 and waveforms in various portions thereof;
FIG. 11 is a block diagram of an optical disc reproducing apparatus in accordance with Embodiment 4;
FIG. 12 is a view showing the structure of the data area of the optical disc in accordance with Embodiment 1;
FIG. 13 is a view showing the address structure of the optical disc in accordance with the embodiments;
FIG. 14 is a view showing the structure of the conventional recordable/reproducible optical disc;
FIG. 15 is a block diagram of the conventional optical disc reproducing apparatus;
FIG. 16 is a view showing waveforms in various portions of the conventional optical disc reproducing apparatus;
FIG. 17 is a graph showing the relationship between the temperature of a recording film irradiated with laser and the change in the characteristic of the recording film thereof; and
FIG. 18 is a flowchart showing an optical disc reproducing method in accordance with Embodiment 5.

It will be recognized that some or all of the drawings are schematic representations for purposes of illustration and do not necessarily depict the actual relative sizes or locations of the elements shown.

### BEST MODE FOR CARRYING OUT THE INVENTION

Embodiments specifically showing the best mode for carrying out the present invention- will be described below together with the drawings.

The present invention is applicable to an optical disc, regardless of the configuration of data areas on the optical disc wherein a user can record and reproduce data as desired, and also regardless of the rotation control system, optical pickup control system, etc. of the optical disc.

For example, as the configuration of a data area on an optical disc wherein the user can record and reproduce data as desired, a system for dividing the data area into a plurality of zones depending on the distance in the radial direction of the optical disc is available.

In other words, the data area is divided into zones formed of a predetermined number of tracks, and the number of sectors in one turn increases as the track advances from an inner circumferential zone to an outer circumferential zone.

The present invention is applicable to an optical disc having both of the data area configurations.

As the optical disc rotation control system, the following systems are available, for example.

In the case of an optical disc conforming to the ZCLV (Zone Constant Linear Velocity) system, the rotation speed of the optical disc is lowered stepwise as an optical pickup section moves from the inner circumference to the outer circumference of the optical disc (it is herein assumed that the rotation speed at each zone is constant). Hence, data recording/reproduction is carried out so that linear velocity becomes almost constant in all turns of the optical disc.

In the case of an optical disc conforming to the ZCAV (Zone Constant Angular Velocity) system, data recording/reproduction is carried out by driving the optical disc having a recording area divided similarly into zones so that its angular velocity becomes constant.

The present invention is applicable to the optical discs conforming to both of the systems.

In addition, as the tracking control system for the optical pickup, the following systems are available, for example.

A continuous servo format is a format wherein pre-grooves are formed continuously along the track; by using this, optical disc tracking control and the like can be carried out.

A sample servo format is a format wherein pre-pits in a servo area are formed discretely on the track; by using this, optical disc tracking control and the like can be carried out.

A conventional optical disc conforming to the above-mentioned sample servo format is disclosed in the publication of Japanese Laid-open Patent Application No. Hei 8-115523.

In the above-mentioned conventional example, media information has been recorded by using gray codes in a data area on a control track in the vicinity of the inner circumferential end and the outer circumferential end.

The servo area of each segment is provided with two wobble pits for tracking control and the like and an identification mark pit for providing information (address information) that is used to identify the segment depending on the recording position in the servo area.

In an optical disc driving apparatus, by confirming coincidence between the various pit patterns reproduced from the above-mentioned optical disc and the predetermined pit pattern in the servo area, the rotation phase of the optical disc is synchronized with the phase of a servo clock; by using this servo clock, the position of the above-mentioned identification mark is read thereby to identify a segment number, and the media information recorded by using gray codes is read thereby to obtain control information.

A conventional optical disc provided with the above-mentioned pre-grooves is disclosed in the publication of Japanese Laid-open Patent Application No. Hei 10-320684.

In the above-mentioned conventional example, wobble pits are provided along the guide groove on each track.

In the control track area, a control track mark serving as a synchronizing signal for the control track area and control information indicating the parameter information of the optical disc have been recorded.

In a user area and the like, a servo synchronizing signal serving as a synchronizing signal for the user area and address information for the sectors thereof have been recorded, and clock marks have been formed along the guide groove.

The present invention is applicable to the optical discs conforming to all of these systems.

Hence, the sample serve format is used for the embodiment; however, instead of this, pre-grooves (groove portions or inter-groove portions) may be provided.

### 〈〈Embodiment 1〉〉

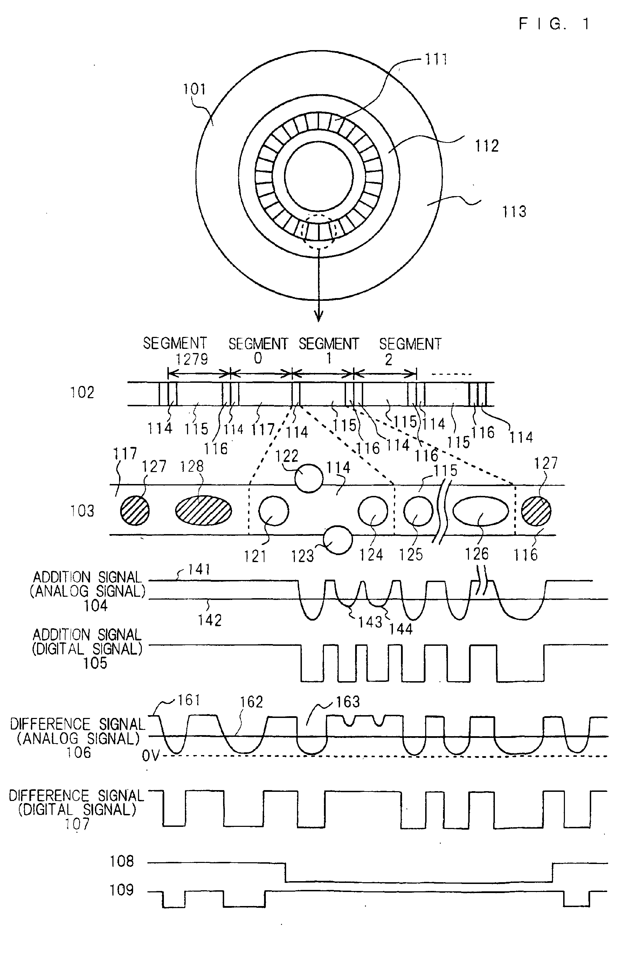

An optical disc, an optical disc reproducing apparatus (reproducing method) and an optical disc recording apparatus (recording method) in accordance with Embodiment 1 will be described by using FIG. 1 to FIG. 5 and FIG. 17,

FIG. 1 shows an optical disc 101 in accordance with Embodiment 1 of the present invention.

The optical disc 101 has a preformatted data area 111 in its inner circumferential portion and has a rewritable lead-in area 112 making contact with the outer circumference of the preformatted data area 111. The area from the outer circumference side of the rewritable lead-in area 112 to the outermost circumferential portion of the optical disc is assigned to a recordable/reproducible data area 113.

The recordable/reproducible data area 113 is an area having a spiral recording track and an ordinary recording film; a user can write data desired to be recorded or can read data desired to be reproduced. The recording film is magnetized; during reproduction, recorded data is read by using the fact that the polarization direction of reflected light changes depending on the magnetization direction of the recording film.

The rewritable lead-in area 112 is a ring-shaped area; when the optical disc is mounted on an optical disc apparatus (reproducing apparatus, recording apparatus or recording/reproducing apparatus), this area is used for learning and adjustment of the intensity and the like of optimal laser light applied from the optical pickup of the optical disc apparatus.

The preformatted data area 111 is an area unique to the present invention and has a ring-shaped structure. 102 is a magnified view showing the structure.

The preformatted data area 111 has a ring-shaped structure around one turn of the optical disc and is divided into 1280 segments (segments 0 to 1279).

Each segment has a control area 114 wherein control-use data formed of pre-pits is recorded, a first reproduction-only data area 115 wherein data (data recorded at the production time of the master disc of the optical disc; the number of tracks, the number of zones, recording/reproduction power setting values, etc., that is, information required for the apparatus to record/reproduce the optical disc and similar information, are suited as this data) formed of pre-pits is recorded, and a second reproduction-only data area 116 wherein data (data unique to each disc and similar data are suited as this data) formed of portions wherein the vertical magnetic anisotropy of the recording film is lost and normal portions is recorded.

The "reproduction-only data area" is an area wherein data that cannot be recorded but can only be reproduced by an ordinary recording/reproducing apparatus. Hence, the data to be recorded in this area is written at the production time of the master disc or written by a special recording apparatus owned by an optical disc manufacturer or a contents (movies and the like) dubbing company and the like.

The data to be recorded in this second reproduction-only data area is data, such as the serial number and the like of the optical disc; therefore, the data is required to prevent unauthorized duplication or to carry out production control and the like, thereby being irrelevant to general users.

Although each segment has the above-mentioned structure, only segment 0 is provided with a third reproduction-only data area 117 instead of the first reproduction-only data area 115 and the second reproduction-only data area 116. Data formed of portions wherein the vertical magnetic anisotropy of the recording film is lost and normal portions is recorded in this area 117, just as in the case of the second reproduction-only data area 116. Although this area is referred to as the third reproduction-only data area 117 in the present specification, it is also possible to assume that the second reproduction-only data area 116 is extended to the first reproduction-only data area 115.

103 is a magnified view showing the structure in the vicinity of a segment 1.

The control area 114 includes a start pit 121, wobble pits 122 and 123 and an address pit 124. These pre-pits are pre-pits for controlling the optical disc. The functions of these pre-pits will be described later.

In the first reproduction-only data area 115, pre-pit data conforming to the phase encoding system has been recorded. The data recording method conforming to the phase encoding system will be described later.

In this embodiment, data conforming to the mark edge system has been recorded, and short pre-pits 125 and long pre-pits 126 are included. The pre-pits are pits formed in the optical disc. The diameter and depth of the pit are dependant on the laser spot size and the wavelength of the laser of each recording/reproducing apparatus; the diameter is desirably about 50 to 80% of the half width of the laser spot; on the other hand, the depth is desirably 1/4 to 1/8 of the wavelength of the laser.

In the second reproduction-only data area 116 and the third reproduction-only data area 117, data formed of portions obtained by degrading the recording film conforming to the phase encoding system and normal portions is recorded. The portions 127 and 128 obtained by degrading the recording film, diagonally shaded portions, have the amount of reflected light equivalent to that at the normal portions, but lack vertical magnetic anisotropy, whereby the portions cannot be magnetized even if an attempt to magnetize them is made; hence, the reflected light in the portions is not polarized. The normal portions indicated by white portions have vertical magnetic anisotropy, whereby, when the portions are magnetized, the reflected light in the portions is polarized to different planes.

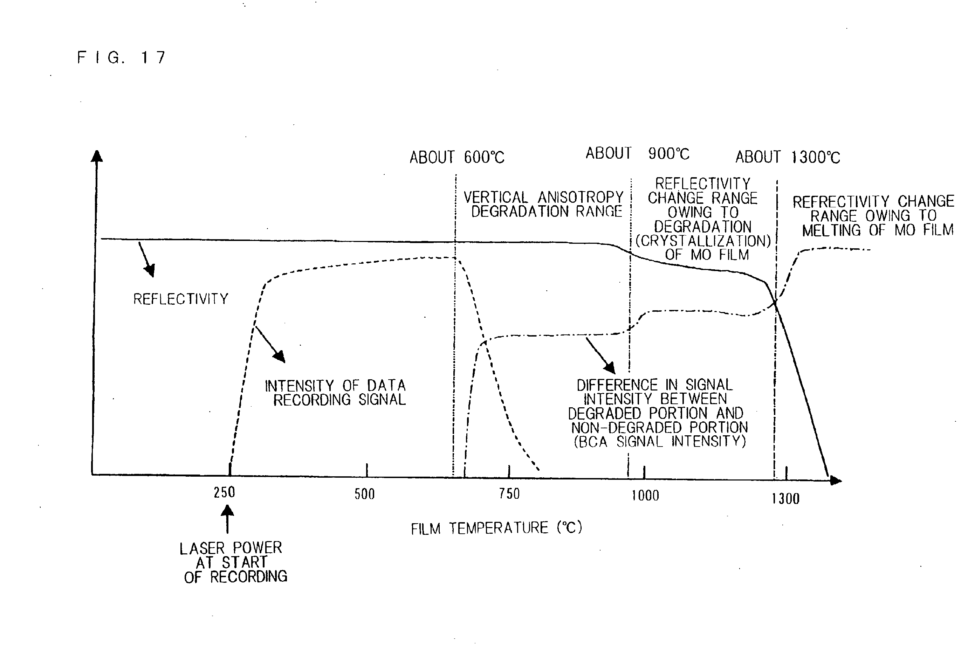

FIG. 17 is a characteristic graph showing reflectivity, the intensity of a data recording signal and the difference in signal intensity between degraded and non-degraded portions in the case when laser light is applied to the recording film of a magneto-optical disc. The horizontal axis represents the temperature (film temperature) of the recording film (unit: °C) .

The recording film of the magneto-optical disc is magnetized while laser light is applied during recording, and the laser light is applied to the magnetized portion during reproduction; the intensity of the data recording signal means the output level of the reproduction signal of data (corresponding to the difference signal 1603 of FIG. 15) based on the difference in the polarizing angle (the polarizing angle differs depending on the direction of magnetization) of the reflected signal of the laser light

When the temperature of the recording film exceeds about 250°C by applying laser light to the recording film during recording; the recording film can be magnetized (data can be recorded). However, when the temperature of the recording film exceeds about 600°C, the recording film is degraded, and the recording film loses its vertical magnetic anisotropy (magnetization becomes impossible). The degradation of the recording film in the case when the temperature of the recording film exceeds about 600°C is permanent; hence, the characteristics of the recording film cannot be restored to its original characteristics.

As shown in FIG. 17, the intensity of the data recording signal is high when the temperature of the recording film is in the range from about 250°C to about 600°C. For this reason, laser light is applied to the recording film so that the temperature of the recording film becomes in the range from about 250°C to about 600°C during ordinary signal recording on the magneto-optical disc.

When the temperature of the recording film is raised further to a temperature exceeding about 950°C during recording, the degradation (crystallization) of the recording film (MO film) advances, and the reflectivity of the recording film begins to lower.

When the temperature of the recording film is raised still further to a temperature exceeding about 1300°C during recording, the recording film is destroyed (owing to the melting of the recording film), and the reflectivity of the recording film lowers abruptly. When laser light for reproduction is applied to the recording film heated to a temperature exceeding about 1300°C during recording, reflected light is hardly obtained (corresponding to the addition signal 1601 of FIG. 15). For example, in the case of a DVD (a phase change material is used as the recording film, data is recorded by forming portions obtained by destroying the recording film by raising the temperature thereof to a temperature exceeding about 1300°C and portions obtained by not destroying the recording film while a BCA is recorded.

Referring to the graph showing the relationship between the reflectivity and the film temperature in FIG. 17, it is possible to understand the changing state of the characteristic of the reflectivity.

As described above, when the temperature of the recording film is raised to a temperature exceeding about 1300°C, the recording film is destroyed, and reflected light is not obtained during reproduction.

When the temperature of the recording film is set at about 1300°C or less (preferably 1250°C or less) during recording, reflected light is obtained during reproduction (corresponding to the addition signal 1601 of FIG. 15), whereby a signal having a constant level or more can be obtained from the reflected light.

When the temperature of the recording film exceeds 950°C during recording, the crystallization of the recording film advances, and the reflectivity of the recording film lowers; hence, by setting the temperature of the recording film at about 950°C or less during recording, a signal having a sufficiently high level can be obtained from the reflected light during reproduction.

Referring to the graph showing the relationship between "the difference in signal intensity between degraded and non-degraded portions" and the temperature of the recording film in FIG. 17, it is possible to understand the changing state of the characteristic of the difference in signal intensity between degraded and non-degraded portions.

As described referring to FIG. 15, laser light is applied to the magneto-optical disc during reproduction, the reflected light thereof is split into two polarized light components by a splitter, the respective polarized light components are detected by photo-detectors, respectively, and the difference signal (corresponding to the difference signal 1603 of FIG. 15) between the output signals of the two photo-detectors is generated.

Since the recording film is magnetized during ordinary recording, the level of the difference signal between the specific polarization plane components (polarized components extracted by the splitter) included in the reflected light from the recording film during reproduction is high (this means that the polarity of the difference signal is positive or negative and that the absolute value of the level is large).

When the temperature of the recording film exceeds 680°C during recording, the vertical magnetic anisotropy of the recording film greatly lowers permanently (the vertical magnetic anisotropy of the recording film is almost lost when the temperature exceeds 750°C, whereby degraded portions are formed), and the level of the difference signal during reproduction lowers (the absolute value of the level approaches zero). A large level difference occurs between the difference signal in the degraded portion and the difference signal in the non-degraded portion. Therefore, permanent (non-rewritable) data can be recorded by providing portions heated to a temperature exceeding 680°C by applying laser light to the recording film and portions not heated.

Conventionally, in order to record data on a magneto-optical disc, a film temperature range from about 250°C to about 600°C (for ordinary data recording) during recording and a film temperature range of about 1300°C or more during recording were used.

In the present invention, a film temperature range from about 680°C to about 1300°C during recording is used in order to record data on a magneto-optical disc.

In other words, data is recorded by forming portions obtained by degrading the recording film by setting the temperature of the recording film at any given temperature in the range from about 680°C to about 1300°C during recording (the vertical magnetic anisotropy of the recording film is lost permanently) and by forming portions wherein the recording film is not degraded.

The amount of the reflected light of the laser light on the recording film during reproduction is smaller than the amount of the reflected light in the portions wherein the recording film is not degraded; however, the amount has a sufficiently detectable level.

Preferably, the temperature of the recording film is set at a temperature in the range of 750°C or more and 1250°C or less. By setting the temperature of the recording film at 750°C or more, the polarizing angle of the reflected light of the laser light applied to the degraded portions of the recording film during reproduction becomes sufficiently small (the difference between the reproduction signal (difference signal) in the portions obtained by degrading the recording film and the reproduction signal (difference signal) in the portions wherein the recording film is not degraded is large), whereby the data error rate of the reproduction signal (difference signal) can be lowered. By setting the temperature of the recording film at 1250°C or less, the recording film does not melt. Since it is possible to obtain an amount of reflected light having a constant level or more during reproduction, the data error rate of the reproduction signal can be lowered.

More preferably, the temperature of the recording film is set at a temperature in the range of 750°C or more and 950°C or less. By setting the temperature of the recording film at 950°C or less, the recording film is not crystallized. Since it is possible to obtain a sufficient amount of reflected light during reproduction, the data error rate of the reproduction signal can be lowered further.

In addition, in the portions heated to the above-mentioned temperature range of 750°C or more and 950°C or less during recording, the reflectivity of the laser light hardly changes during reproduction in comparison with the reflectivity in the portions not heated to the above-mentioned temperature range during recording. Therefore, optical heads that are used for compact discs, DVDs, etc. to detect only the amount of reflected light cannot detect the portions that were heated during the recording to the above-mentioned temperature, whereby the concealment of data is enhanced.

By setting the temperature of the recording film in this temperature range, only the vertical magnetic anisotropy thereof is degraded, whereby, in order to output the difference between the degraded portion and the portion not degraded (the non-degraded portion) as a signal, it is necessary to used an optical head for magneto-optical (MO) discs, capable of outputting the reproduction signal of data on the basis of the presence or absence of the polarizing angle.

By degrading the recording film in the range wherein a sufficient amount of reflected light is obtained during reproduction, there is no fear of mistakenly detecting the portion degraded so that the vertical magnetic anisotropy deteriorates when a reproduction signal (depending on the magnitude of the amount of reflected light) is detected from pre-pits.

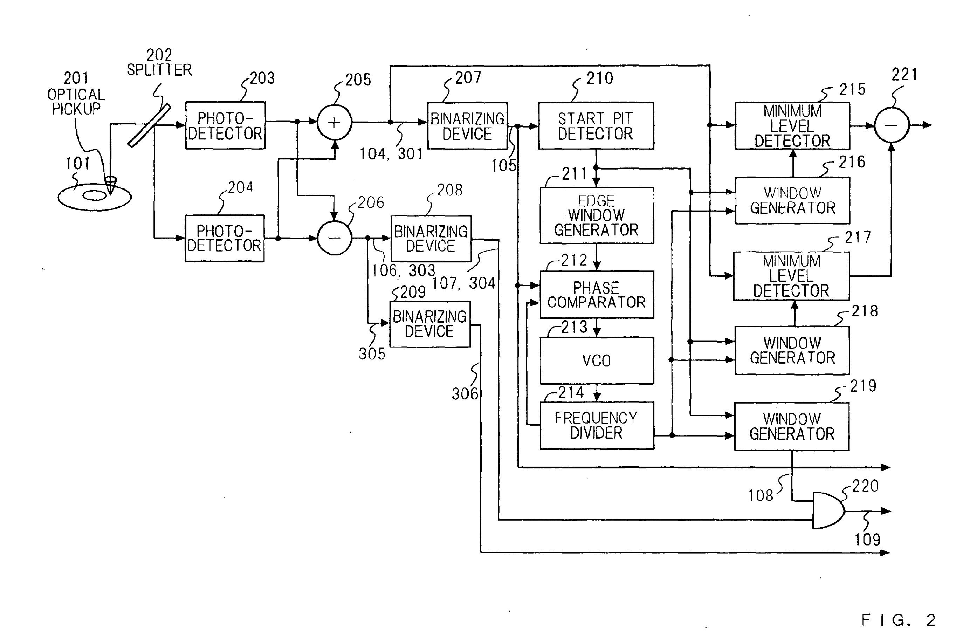

FIG. 2 is a schematic configuration of an optical disc reproducing apparatus in accordance with the present invention.

Numeral 101 designates an optical disc, numeral 201 designates an optical pickup, numeral 202 designates a splitter, numerals 203 and 204 designate photo-detectors, numeral 205 designates an adder, numeral 206 designates a subtracter, numerals 207, 208 and 209 designate binarizing devices, numeral 210 designates a start pit detector, numeral 211 designates an edge window generator, numeral 212 designates a phase comparator, numeral 213 designates a voltage-controlled oscillator (VCO), numeral 214 designates a frequency divider, numerals 215 and 217 designate minimum level detectors, numerals 216, 218 and 219 designate window generators, numeral 220 designates an AND logic circuit, and numeral 221 designates a subtracter.

The optical pickup 201 applies laser light to the optical disc and receives a reflected light. The reflected light is split by the splitter 202 into the light component on the first polarization plane and the light component on the second polarization plane.

The light component of the first polarization plane and the light component of the second polarization plane pass through respectively different paths and are input to the photo-detectors 203 and 204, respectively.

The photo-detectors 203 and 204 convert the received light components into electrical signals and output them.

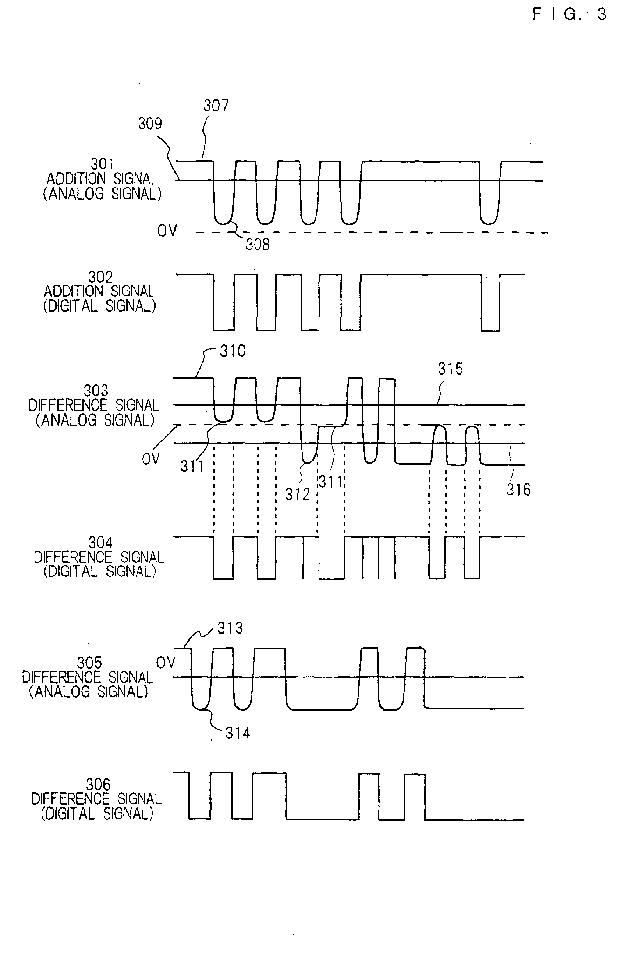

The adder 205 receives the output signals of the photo-detectors 203 and 204, adds them and outputs an addition signal (analog signal). The addition signal (analog signal) is transmitted to the binarizing device 207 and the minimum level detectors 215 and 217. The waveform of the addition signal (analog signal) is shown in 104 (FIG. 1) and 301 (FIG. 3).

The addition signal (analog signal) is a signal proportionate to the amount of reflected light.

The binarizing device 207 receives the addition signal (analog signal) and binarizes (digitizes) the signal depending on threshold values 142 and 309. The waveform of the addition signal (digital signal) is shown in 105 (FIG. 1) and 302 (FIG. 3).

The addition signal (analog signal) has a voltage 308 close to 0 V in a portion wherein a pre-pit is present and has a high voltage 307 in a portion wherein no pre-pit is present. The threshold value for binarization is set at an intermediate value between the voltage 307 and the voltage 308.

The subtracter 206 receives the output signals of the photo-detectors 203 and 204, subtracts them from each other and outputs a difference signal (analog signal). The waveform of the difference signal (analog signal) is shown in 106 (FIG. 1) and 303 (FIG. 3).

The binarizing devices 208 and 209 receive the difference signal (analog signal) and binarize (digitize) the signal depending on respectively different threshold values.

The binarizing device 208 is intended to reproduce data formed in the portions lacking vertical magnetic anisotropy and the normal portions (data recorded in the second reproduction-only data area 116 and the third reproduction-only data area 117).

The binarizing device 208 receives the difference signal (analog signal) 106 (FIG. 1), 303 (FIG. 3) and outputs a difference signal (analog signal) 107 (FIG. 1), 304 (FIG. 3).

When the difference signal (analog signal) 106, 303 is viewed, the output signal in a portion wherein the recording film of the optical disc is normal becomes different from the output signal in a portion wherein the recording film is degraded; the output signal in a portion wherein a sufficient amount of reflected light is present becomes different from the output signal in a portion wherein the amount of reflected light is small (for example, in a portion wherein a pre-pit is present); and the output signal also becomes different depending on the direction of magnetization even in portions wherein the recording film of the optical disc is normal.

In FIG. 3, the difference signal in the portion wherein the recording film of the optical disc is normal becomes 310 or 312 depending on the direction of magnetization. In addition, the difference signal in a portion wherein the recording film of the optical disc is degraded becomes 311 being close to 0 V (FIG. 3).

In a portion wherein the amount of reflected light is small (in a portion wherein a pre-pit is present), the difference signal becomes a voltage 163 being close to O V (FIG. 1).

As shown in FIG. 3, the binarizing device 208 uses intermediate values 315 and 316 between 0 V and the positive and negative maximum input voltages 310 and 312 as threshold values. In FIG. 1, the difference signal 106 is binarized depending on a threshold value 162. In other words, binarization is carried out on the basis of the magnitude of the absolute value of the difference signal.

Hence, the difference signal (digital signal) output by the binarizing device 208 becomes 107 (FIG. 1), 304 (FIG. 3).

Ordinary record data (data based on the difference in the direction of magnetization) except transient output signals can be eliminated from the difference signal (digital signal) output from the binarizing device 208; for example, the difference signal output from a portion (a pre-pit or the like) wherein the amount of reflected light is small is similar to the difference signal (107 of FIG. 1) output from a portion wherein the recording film is degraded.

The binarizing device 209 is intended to reproduce data (data that can be reproduced by changing the polarizing angle of the reflected light depending on the direction of magnetization of the recording film) recorded in the ordinary data recording area 113.

The binarizing device 209 receives a difference signal (analog signal) 305 (FIG. 3) and outputs a difference signal (analog signal) 306 (FIG. 3).

The binarizing device 209 receives ordinary record data (data based on the difference of the direction of magnetization), carries out binarization by using 0 V as a threshold value, and outputs a binarized signal.

In FIG. 1, the addition signal 104 has a low level in portions wherein pre-pits are present and has high levels in portions wherein no pre-pit is present.

The addition signal 104 has a high level even in portions 127 and 128 wherein the recording film is degraded and the vertical magnetic anisotropy thereof is lost.

Although data formed of pre-pits and data formed of portions wherein the recording film is degraded and the vertical magnetic anisotropy thereof is lost and normal portions are present in the preformatted data area 111, the addition signal (digital signal) 105 represents only data formed of pre-pits. Similarly, it is also possible to obtain a reproduction signal from pre-pits for control.

Hence, although data formed of pre-pits and data formed of portions wherein the recording film is degraded and the vertical magnetic anisotropy thereof is lost are mixed and recorded, the data formed of pre-pits and signals from pre-pits for control can be reproduced.

The output signal of the binarizing device 207 is transmitted to the start pit detector 210 and the phase comparator 212.

The start pit detector 210 receives the output signal of the binarizing device 207 and detects the start pit of each segment.

It is assumed that the optical pickup applies light to the preformatted data area 111 and the optical disc 101 rotates at a constant speed.

The third reproduction-only data area 117 in the segment 0 has no pre-pit; hence, when the optical pickup passes through the third reproduction-only data area 117, the addition signal 105 has a high level for a the longest period. Hence, by detecting a zone wherein the high level continues for the longest period, it is possible to detect the position of the third reproduction-only data area 117 (the position of the segment 0). In other words, it is possible to specify the rising position of the start pit of the segment 1.

Since the size of each segment is constant, the position of an adjacent start pit can be predicted by using the rising of the start pit of the segment 1 as a starting point. Hence, by using the rising of the start pit of the segment 1 as a starting point, the window signal of the start pit of the segment 2 is generated, and the AND logic output of the window signal and the output signal of the binarizing device 207 is obtained (not shown). Hence, it is possible to detect the rising position of the start pit of the segment 2. By repeating this, it is possible to specify the rising positions of the start pits of 1280 segments.

The start pit detector 210 outputs the output signal of the start pit of each segment and transmits the output signal of the start pit to the edge window generator 211 and the window generators 216, 218 and 219.

At the same time, the address of each segment can be specified by using the segment 0 as a starting point.

The edge window generator 211 receives the output signal of the start pit and generates a window signal including the output signal of the start pit.

The VCO 213 outputs an oscillation output signal and transmits the oscillation output signal to the frequency divider 214. The frequency divider 214 receives the oscillation output signal, divides the frequency of the signal and outputs a first frequency division signal and a second frequency division signal.

The first frequency division signal is a signal having the same frequency (1280 pulses for one rotation of the optical disc) as that of the start pit, and the second frequency division pulse signal has a frequency 512 times as high as that of the first frequency division pulse signal.

The first frequency division signal is transmitted to the phase comparator 212.

The second frequency division signal is transmitted to the window generators 216, 218 and 219.

The phase comparator 212 receives the output signal of the binarizing device 207, the first frequency division signal and the window signal output from the edge window generator 211.

The phase comparator 212 compares the output signal of the binarizing device 207 with the first frequency division signal in the high period of the window signal output from the window generator 211 and outputs an error signal. The error signal is fed back to the VCO 213.

With the above-mentioned circuit configuration, the first frequency division signal is servo locked to the output signal of the start pit.

The window generator 216 receives the output signal of the start pit and the second frequency division signal and generates a window signal including the output signal 143 (FIG. 1) of the wobble pit 122 on the basis of the rising edge of the start pit. The window signal is input to the minimum level detector 215.

The minimum level detector 215 receives the window signal output from the window generator 216 and the addition signal (analog signal), detects the minimum voltage of the addition signal (analog signal) within a period specified by the window signal, holds the minimum voltage and outputs the voltage.

The window generator 218 receives the output signal of the start pit and the second frequency division signal and generates a window signal including the output signal 144 (FIG. 1) of the wobble pit 123 on the basis of the rising edge of the start pit. The window signal is input to the minimum level detector 217.

The minimum level detector 217 receives the window signal output from the window generator 218 and the addition signal (analog signal), detects the minimum voltage of the addition signal (analog signal) within a period specified by the window signal, holds the minimum voltage and outputs the voltage.

The subtracter 221 receives the minimum values output from the minimum level detectors 215 and 217, calculates the difference therebetween and outputs the difference.

If the optical pickup is positioned at the center of the recording track area 103, the output signal of the subtracter 221 is close to 0 V; however, if the optical pickup is close to the wobble pit 122 from the center of the recording track area 103, for example, the output signal of the wobble pit 122 becomes smaller, and the output signal of the wobble pit 123 becomes larger. On the other hand, if the optical pickup is close to the wobble pit 123 from the center of the recording track area 103, the output signal of the wobble pit 122 becomes larger, and the output signal of the wobble pit 123 becomes smaller.

Hence, by feeding back the output signal of the subtracter 221 to tracking control, the optical pickup can be positioned at the center of the recording track area 103 (the known sampling servo system).

In addition, an address pit (not shown) is detected by using the output signal of the start pit and another window signal generated from the second frequency division signal.

The address of each segment can be specified by using a one-bit address pit in accordance with a method described later.

Furthermore, data (data formed of pre-pits) (not shown) recorded in the second reproduction-only data area 115 by using a still another window signal generated from the output signal of the start pit and the second frequency division signal is detected.

Next, the window generator 219 receives the output signal of the start pit and the second frequency division signal and generates a window signal 108 (FIG. 1) on the basis of the rising edge of the start pit. The window signal is a signal that uses an area in which only data based on the magnitude of magnetic anisotropy is recorded (the reproduction signal of pre-pits is not output in this range) as its effective period on the basis of the reproduction signal of the start pit.

The AND gate 220 receives the output signal 304 of the binarizing device 208 and the window signal 108 (FIG. 1) and outputs 109. Data based on pre-pits is eliminated by the window signal 108, whereby the output signal of the AND gate 220 includes only the data based on the portions wherein the recording film is degraded.

By using a clock, that is, the output signal of a VCO (not shown), the phase of which is synchronized with that of the start pit, a reproducing circuit (not shown) reproduces data (pre-pit data and data from degraded recording film) recorded on the optical disc.

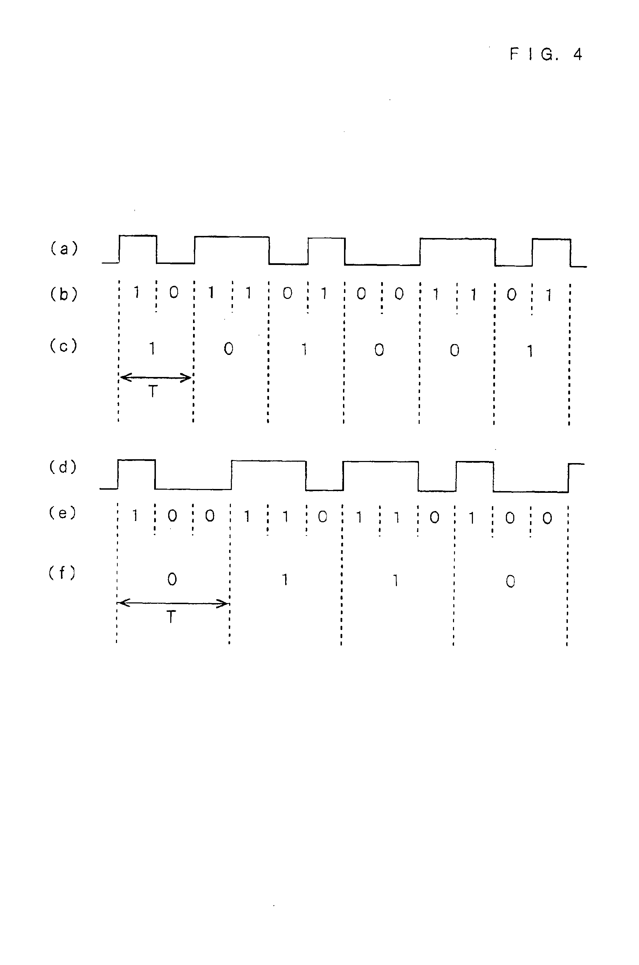

FIG. 4 shows data recording systems, that is, the phase encoding system ((a), (b) and (c)) and phase modulation system ((d), (e) and (f)).

In Embodiment 1, data recorded in the first reproduction-only data area, the second reproduction-only data area and the third reproduction-only data area is encoded in conformity with the phase encoding system; in other embodiments, data recorded in the first reproduction-only data area and the like is encoded in conformity with the phase modulation system.

In FIG. 4, the portion (a) shows the waveform (the waveform of data after coding) of a signal in conformity with the phase encoding system reproduced from the optical disc. The data period T for one bit of the signal conforming to the phase encoding system is a period separated as shown in the portion (c).

In the phase encoding system, data after coding changes at both ends of each data period T.

If input data is 0, data after coding is maintained constant in each data period T (data after coding may be 0 or 1).

If input data is 1, data after coding changes at the center (the position of T/2) of each data period T (data after coding may change from 0 to 1 or from 1 to 0).

In the case when the signal (after coding) shown in the portion (a) of FIG. 4 is reproduced, data is read per unit of T/2 as shown in the portion (b). Since data always changes at both ends of the data period T, it is easy to generate a clock from data.

If data does not change in the data period T, data after decoding (original input data) is 0.

If data changes at the center of the data period T, data after decoding (original input data) is 1.

Data after decoding is shown in the portion (c) of FIG. 4.

Data conforming to the phase modulation system will be described by using the portions (d), (e) and (f) of FIG. 4.

The portion (d) shows the waveform (the waveform of data after coding) of a signal conforming to the phase modulation system reproduced from the optical disc.

Each piece of Data is recorded in every data period T.

When the three T/3 periods obtained by dividing the data period T into three are viewed as shown in the portion (e), data in the first T/3 period is always 1, and data in the last T/3 period is always 0.

If input data is 0, data in the central T/3 period is 0.

If input data is 1, data in the central T/3 . period is 1.

In the case when the signal (after coding) shown in the portion (d) of FIG. 4 is reproduced, data is read per unit of T/3 as shown in the portion (e). Since data always changes from 0 to 1 at the end of the data period T, it is easy to generate a clock from the data.

If data in the central T/3 period is 0, data after decoding (original input data) is 0; if data in the central T/3 period is 1, data after decoding (original input data) is 1.

Data after decoding is shown in the portion (f) of FIG. 4.

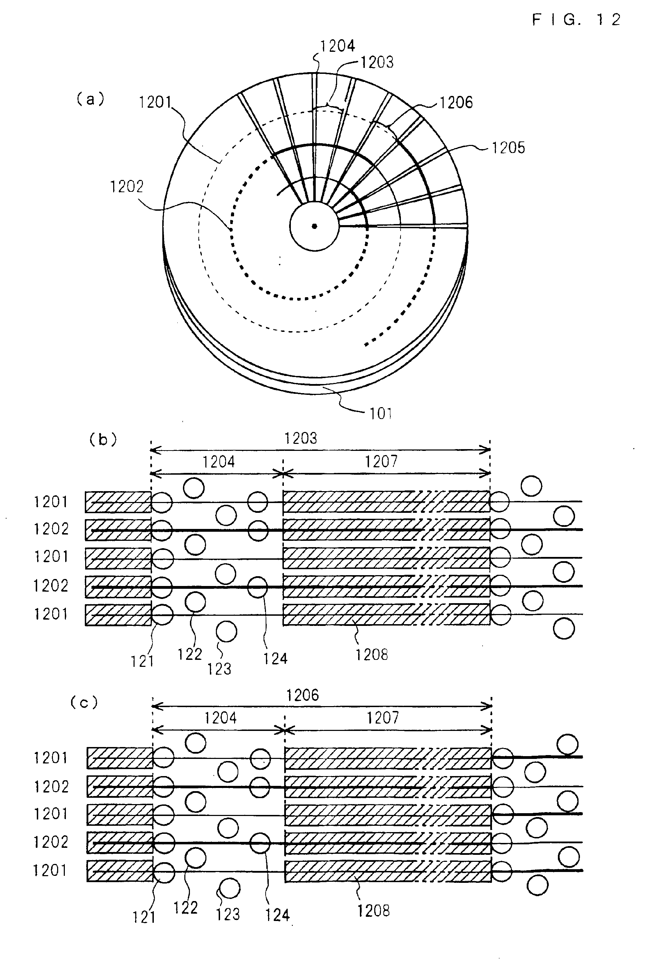

The portion (a) of FIG. 12 is a schematic view showing the structure of the ordinary data area (area wherein data is recorded depending on the direction of magnetization of the recording film) of the optical disc in accordance with the embodiment.

In the portion (a) of FIG. 12, numeral 101 designates an optical disc, numeral 1201 designates a first recording track area, numeral 1202 designates a second recording track area adjacent to the first recording track area, numeral 1203 designates a segment obtained by dividing the first recording track area 1201 and the second recording track area 1202 into 1280 pieces, and numeral 1204 designates a control area including a start pit, servo pits for tracking and an address pit representing the positional information of the disc.

As shown in the figure, each of the first recording track area 1201 and the second recording track area 1202 is a spiral area wherein the control area 1204 is used as a starting point and an ending point; in the case when the spiral recording track area is traced from the inner circumference to the outer circumference of the magneto-optical disc, the second recording track area 1202 ends in the control area 1205, and the first recording track 1201 starts at the position (the control area 1205) wherein the second recording track area 1202 ends.

In the portion (a) of FIG. 12, the magneto-optical disc is a disc having a diameter of about 50 mm, and the track pitch of the first recording track area 1201 and the second recording track area 1202 is about 0.6 µm. In the portion (a) of FIG. 12 for explaining the format configuration of the magneto-optical disc, the first recording track area 1201 and the second recording track area 1202 adjacent to each other are shown so as to be significantly magnified in comparison with the overall size of the magneto-optical disc.

The magneto-optical disc in accordance with the embodiment is produced on the assumption that the optical constants of an optical spot used for recording/reproduction are as follows: the wavelength of light is 660 nm, and the NA of a condenser lens is 0.6. In this case, the half width of the light beam becomes. λ / (2 · NA) = about 0.6 µm.

The portion (b) of FIG. 12 is a magnified view of the control area 1204 and the like (a magnified plan view of the magneto-optical disc).

In the portion (b) of FIG. 12, numeral 1203 designates a segment comprising one recording track area and one control area, numeral 1204 designates a control area, and numeral 1208 designates a recording track area (data recording area), having a length of 1207, for recording data.

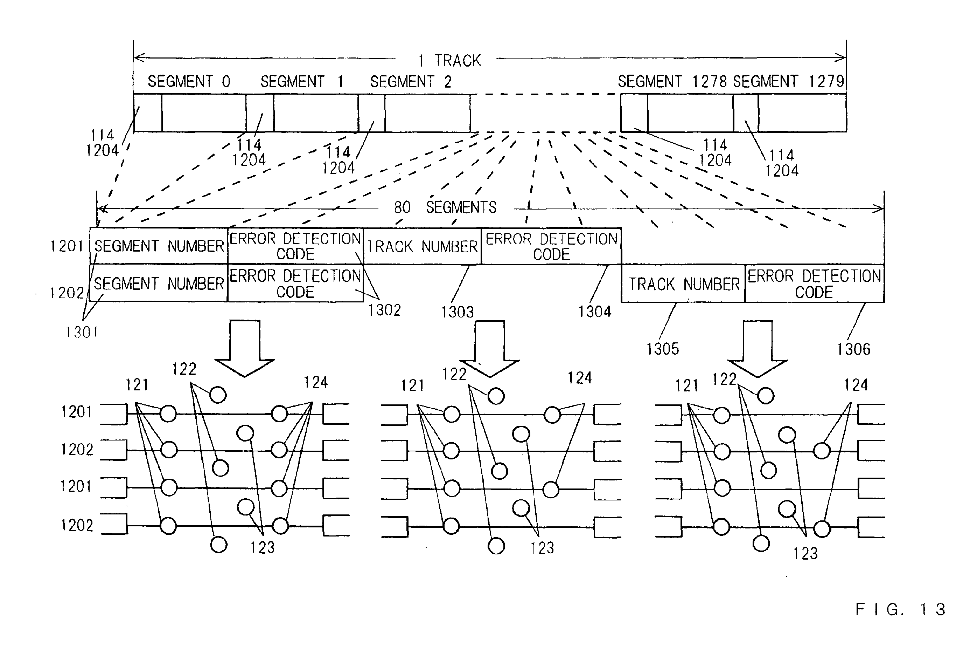

The control area 1204 has a start pit 121, wobble pits 122 and 123 for detecting a tracking signal and an address pit 124 wherein address information representing the positional information on the magneto-optical disc is dispersively disposed at the start of the segment, one bit for each segment (its structure is the same as that of the control area of the preformatted data area 111. In addition, the explanation in FIG. 13 includes the explanation of the control area of the preformatted data area 111).

In the optical disc in accordance with Embodiment 1, the wobble pit 122 and the wobble pit 123 for tracking control conforming to the sample servo system are shared with those on adjacent recording tracks.

The magneto-optical disc in accordance with the embodiment has the recording track areas 1201, 1202, etc. formed spirally, and each of the recording track areas 1201, 1202, etc. is divided into 1280 segments 1203 by the control areas 1204 aligned radially (in the radial direction of the magneto-optical disc). Hence, in the case when represented by angular coordinates having an origin at the center of the magneto-optical disc, the control areas are provided at every 360 degrees/1280 pieces = 0.28125 degrees on the magneto-optical disc, regardless of the distance of the position of the recording track area from the origin.

One segment 1203 has one control area 1204 and one data recording area 1208.

On the basis of this kind of configuration, the first recording track area 1201 and the second recording track area 1202 being different from each other in tracking polarity (the wobble pits 122 and 123 are positioned at the left and right of the extension line of the recording track area or positioned conversely at the right and left thereof) are formed alternately in every other turn.

A segment wherein optical beam switching is carried out has a structure shown in the portion (c) of FIG. 12. As shown in the figure, the back-and-forth relationship between the wobble pits 122 and 123 is reversed at the left and right control areas 1204 of the recording track area of the segment 1206 at this switching point. Hence, switching is carried out from the second track 1202 to the first track 1201. This is repeated alternately, whereby the first track 1201 and the second track 1202 are disposed continuously.

In addition, the address pit 124 represents one bit of address data depending on the presence or absence thereof. This corresponds to the dispersed address format (Japanese Patent Application No. Hei 11-021885 and Japanese Patent Application No. Hei 11-329265) invented by the inventors of the present application.

This dispersed address format will be described briefly by using FIG. 13.

A track circulating once around the magneto-optical disc is divided into 1280 segments, and one address bit is assigned (an address pit is present or absent) in each control area of 1280 segments.

The 1280 segments 1203 in one turn of the disc are divided by 16, thereby generating address information (information depending on the presence or absence of the address pit) wherein the address is represented in units of 1280/16 = 80 bits.

The address information of 80 bits includes 10-bit segment number information (the positional information in the rotation direction) 1301, a 14-bit segment number information error detection code 1302, 14-bit track number information (the track number of a recording track area) 1303 of an odd-numbered track 1201, 14-bit BCH coded error correction information 1304 of the track number information of the odd-numbered track, 14-bit track number information 1305 of an even-numbered track 1202, and 14-bit BCH coded error correction information 1306 of the track number information of the even-numbered track.

By the segment information, the angular information of the magneto-optical disc can be obtained.

The segment number information 1301 and the segment number information error detection code 1302 are respectively aligned in the radial direction. Sixteen pieces of the segment number information disposed in each turn designate 16 segment numbers. By counting the number of segments by using the 16 segments as starting points, the segment numbers of other segments can be specified.

Furthermore, the segments aligned adjacent to one another from the innermost circumference track to the outermost circumference track in the radial direction have the same segment number information 1301 and the same segment number information error detection code 1302, whereby the segment number information can be detected even when tracking control is not made effective (for example, even during seeking).

Hence, even in a state wherein tracking control is not made effective, it is possible to detect the control area 1204 placed at the switching point.

By carrying out tracking control and by reading the track numbers 1303 and 1305, the positional information in the radial direction is obtained. These track numbers 1303 and 1305 are used as search information for disc seeking and the like.

In a control area wherein the track number information 1303 of an odd-numbered track 1201 and the track number information error correction information 1304 of the odd-numbered track are present, the track number information 1305 of an even-numbered track 1202 and the track number information error correction information 1306 of the even-numbered track are not present in the control area adjacent thereto. Similarly, in a control area wherein the track number information 1305 of an even-numbered track 1202 and the track number information error correction information 1306 of the even-numbered track are present, the track number information 1303 of an odd-numbered track 1201 and the track number information error correction information 1304 of the odd-numbered track are not present in the control area adjacent thereto.

In 16 pieces of address information in one turn, 8 pieces of address information having the track number information 1303 or the like of an odd-numbered track 1201 and 8 pieces of address information having the track number information 1305 or the like of an even-numbered track 1305 are arranged alternately.

As a result, misreading of track numbers owing to crosstalk between adjacent tracks can be prevented. In addition, even when on-tracking cannot be done completely, track numbers can be read accurately.

In the magneto-optical disc in accordance with the present invention, the polarity of tracking control changes in every other turn, whereby control for detecting the position of the optical pickup on the magneto-optical disc and properly reversing the tracking polarity is necessary; for this purpose, timing control is carried out by detecting address data (the segment number information 1301 and the segment number information error detection code 1302).

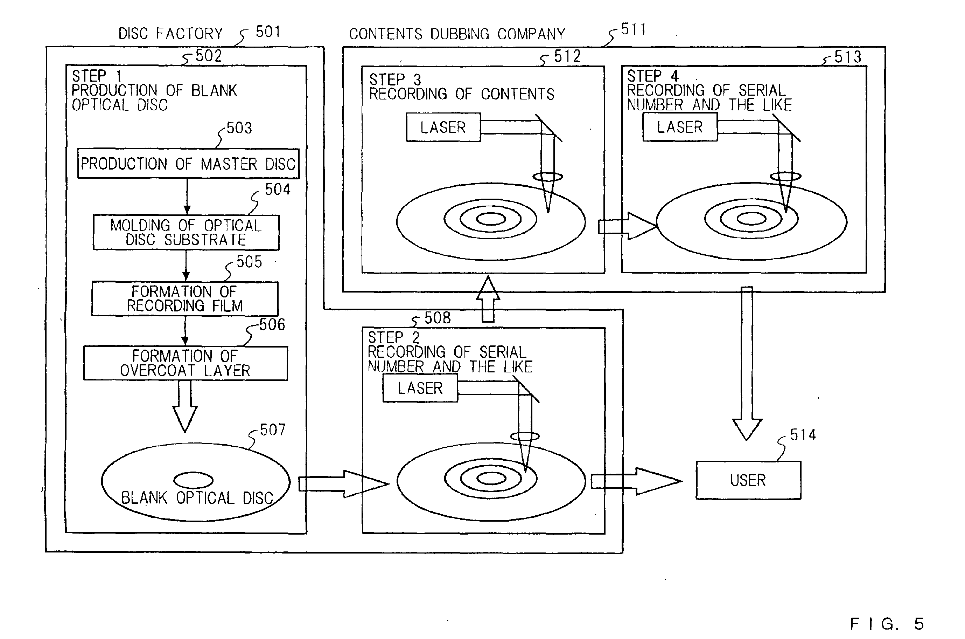

FIG. 5 shows a method for producing optical discs in accordance with the present invention.

In a disc factory 501, optical discs are produced (at step 1, 502), and a production serial number is written on each optical disc (at step 2, 508).

Some of the completed optical discs are directly sold to users 514. Some of the other optical discs are sold to contents dubbing companies 511. Each contents dubbing company 511 records contents (for example, movies) on the optical discs (at step 3, 512) and writes serial numbers, encrypted data for prevention of unauthorized duplication, etc. required for the dubbing company (at step 4, 513).

At step 1 (502), a master disc is produced first (503). The start pit, the wobble pits, the address pit and, for example, preformatted data common to optical discs produced from one master disc (for example, data, such as the number of the master disc, to be recorded in the first reproduction-only data area 115) are recorded by using pre-pits. The pre-pits are formed at a step of applying laser light to the master disc in the master disc producing step.

Next, a stamper is produced from the master disc, and an optical disc substrate is molded from the stamper (504). The pre-pits formed on the master disc are also formed on the optical disc substrate.

Next, a recording film is formed on the optical disc substrate (505).

Next, an overcoat layer is formed on the recording film (506).

By the above-mentioned production method, a blank optical disc 507 is completed (the pre-pit data has already been written).

At step 2 (508), the optical pickup, having gained access to the second reproduction-only data area 116 or the third reproduction-only data area 117, applies laser light having intensity to the extent that the recording film is degraded partially (however, to the extent that the reflectivity of the recording film is not changed), thereby recording data, such as a serial number for the disc factory. At this time, the recording apparatus carries out the phase control and tracking control of the optical pickup on the basis of the start pits, the wobble pits and the address pits formed on the optical disc. The phase control and tracking control methods are similar to those of the reproducing apparatus (FIG. 2). Data to be recorded is recorded by using a clock, that is, the output signal of a VCO phase-synchronized with the start pits. As a result, the recording apparatus can accurately record the preformatted data on tracks.

In the optical disc to be sold directly to the users 514, all of the recording films of the second reproduction-only data area 116 and the third reproduction-only data area 117 are degraded at step 2 (508). Hence, companies attempting to carry out unauthorized duplication by using this optical disc cannot produce unauthorized pirated optical discs and cannot record data that may become confused with the data written in the second reproduction-only data area and the third reproduction-only data area of the authorized optical disc. In this way, optical discs produced by unauthorized duplication can be discriminated from authorized products, whereby copyright protection can be attained.

The contents dubbing company 511 purchases optical discs from the optical disc factory.

At step 3 (512), the optical pickup gains access to the ordinary data area (113 of FIG. 1) and applies laser light to magnetize the recording track area, thereby recording contents (for example, movies, sports, music, game software, maps, software programs, etc.). The intensity of the laser light is set at intensity required to magnetize the recording film.

At step 4 (513), the optical pickup, having gained access to the second reproduction-only data area 116 or the third reproduction-only data area 117, applies laser light having intensity to the extent that the recording film is degraded partially (however, to the extent that the reflectivity of the recording film is not changed), thereby recording data, such as a serial number for the dubbing company.

At step 4, an area different from the area wherein data was recorded at step 2 (508) can also be used as a data recording area; in addition, in the case when the dubbing company purchases discs not having passed through the above-mentioned step 2 and records the above-mentioned serial number and the like at step 4, the same area may be used.

Completed optical discs are sold to the users 514.

In Embodiment 1, the configuration of the pre-pit area 114 (FIG. 1) of the preformatted data area 111 is different from that of the pre-pit area 1204 (FIG. 12) of the ordinary data area.

In another embodiment, the configuration of the pre-pit area of the ordinary data area is the same as that of the control-use pre-pit area of the preformatted data area. Areas including the preformatted data area have the configuration shown in FIG. 12. In other words, the preformatted data area has the same track width as that of the ordinary data area and also has segments and control-use pre-pit areas (1204 of FIG. 12) similar to those of the ordinary data area in shape. As a result, the disc apparatus can carry out the phase control, tracking control, etc. for the optical pickup in the preformatted data area by using methods similar to those used for the ordinary data area.

### 〈〈Embodiment 2〉〉

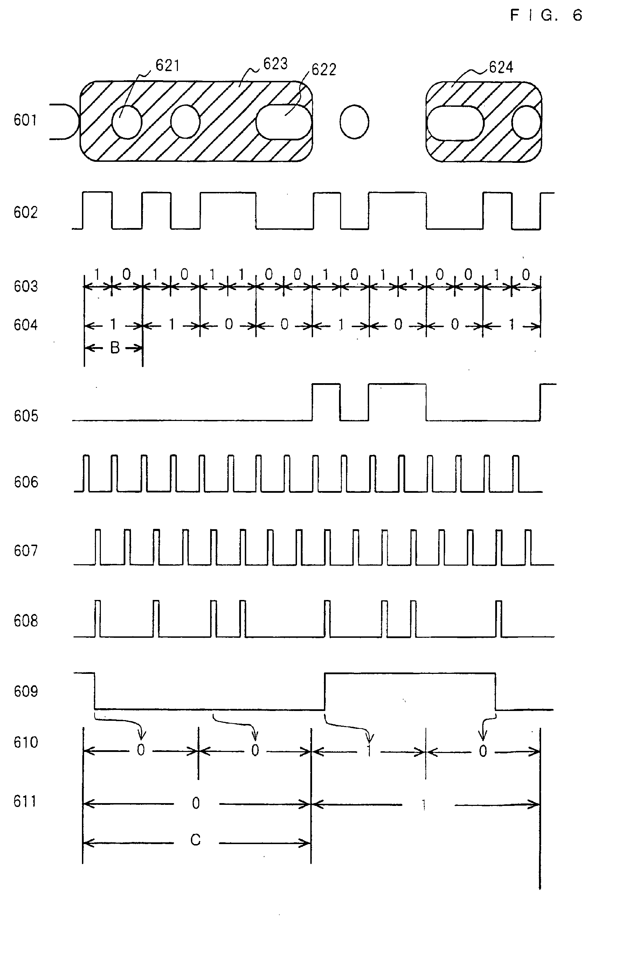

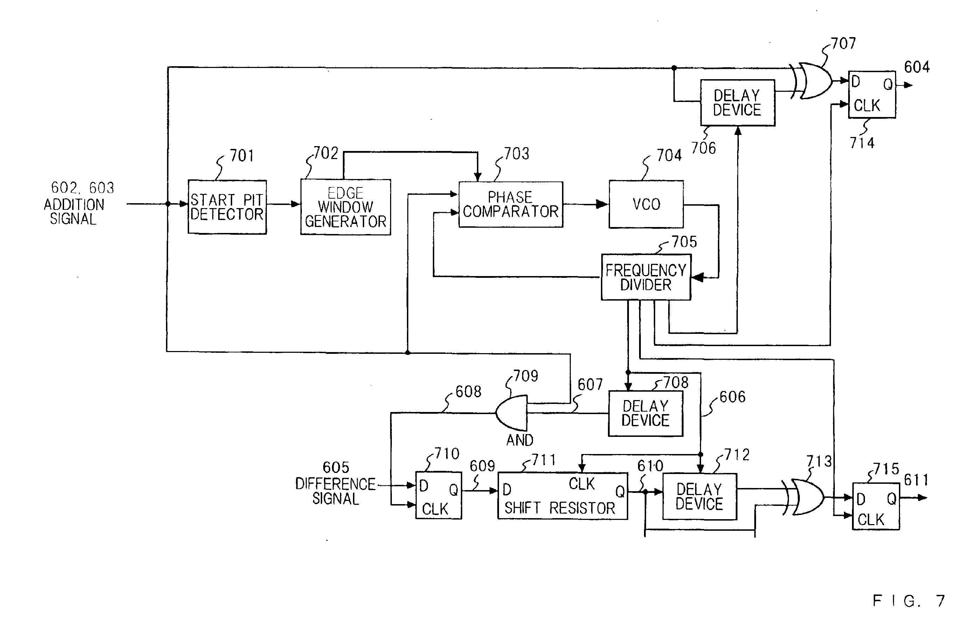

An optical disc and an optical disc reproducing apparatus (reproducing method) in accordance with Embodiment 2 will be described referring to FIG. 6 and FIG. 7.

The basic configuration of the optical disc in accordance with Embodiment 2 is the same as that of the optical disc in accordance with Embodiment 1. In the optical disc in accordance with Embodiment 1, data formed by degrading the recording film was provided in the second reproduction-only data area 116 and the third reproduction-only data area 117 having no pre-pit.

On the other hand, in the optical disc in accordance with Embodiment 2, data formed by degrading the recording film (the recording film has lost its vertical magnetic anisotropy) is overwritten in the data area provided width pre-pits (the first reproduction-only data area and areas provided with start pits, wobble pits and address pits (the areas may be positioned in either the preformatted data area 111 or the ordinary data area 113)).

The above-mentioned special portions of the optical disc and the optical disc reproducing apparatus (reproducing method) in accordance with Embodiment 2 will be described below. The same components as those of Embodiment 1 are not explained.

In FIG. 6, numeral 601 shows part of a recording pattern on the optical disc in accordance with Embodiment 2, wherein data 621 and 622 formed of pre-pits are overwritten with data 623 and 624 formed of degraded recording film.

In 601, the data formed of pre-pits and the data formed of degraded recording film are respectively encoded in conformity with the phase encoding system and recorded.

When it is assumed that the mark length (the length per bit) of 1 bit data of the data formed of pre-pits is B, the short pre-pit 621 has a length of B/2, and the long pre-pit 622 has a length of B.

On the other hand, when it is assumed that the mark length of 1 bit data of the data formed of degraded recording film is C, the portion 624 formed of a short degraded recording film has a length of C/2, and the portion 623 formed of a long degraded recording film has a length of C. The length C is equal to 4B.

An addition signal (digital signal) 602 obtained by adding the output signals of the two light components split by the splitter corresponds to the output signal of the binarizing device 207 of FIG. 2. Hence, the addition signal 602 becomes an output signal corresponding to pre-pits, regardless of whether the recording film is degraded or not. The value of the addition signal in units of B/2 is shown in 603. By decoding this, an original signal 604 is obtained.

A difference signal 605 obtained by subtracting the output signals of the two light components split by the splitter corresponds to the output signal of the binarizing device 208 of FIG. 2.

A method for obtaining original data 611 on the basis of the difference signal 605 will be described referring to FIG. 7 showing the optical disc reproducing apparatus in accordance with Embodiment 2.

In Embodiment 2, like the preformatted data area 111, the ordinary data area 113 is divided into 1280 segments. Each segment has a data area and a control area 114 similar to the preformatted data area 111. Hence, the control area 114 has a start pit, two wobble pits and an address pit.

FIG. 7 shows a schematic configuration of the optical disc and the optical disc reproducing apparatus in accordance with Embodiment 2.

In FIG. 7, the addition signal 602 is input to a start pit detector 701. The start pit detector 701 detects the start pit of each segment by using a method similar to that of Embodiment 1 and outputs the output signal of the start pit.

The output signal of the start pit is input to an edge window generator 702. The edge window generator 702 generates a window signal including the rising edge of the start pit and outputs the signal.

The output signal of a voltage-controlled oscillator (VCO) 704 is input to a frequency divider 705.

The frequency divider 705 outputs a first frequency division signal obtained by dividing the frequency of the output signal of the VCO 704.

A phase comparator 703 compares the addition signal (digital signal) with the first frequency division signal with respect to phase in the window output from the edge window generator 702 and outputs an error signal.

The error signal is fed back to the VCO 704.

The above-mentioned configuration is the same as that of Embodiment 1 (FIG. 2).

The addition signal 602 is ANDed (not shown) with the window signal of the pre-pit data generated by the output signal of the start pit and the output signal of the frequency divider and then decoded by a bi-phase mark decoder (including a delay device 706, an exclusive OR gate 707 and a D-type flip-flop 714; their schematic configurations are shown in FIG. 7).

The addition signals 602 and 603 are delayed by a time of B/2 by the delay device 706 and exclusively ORed (707) with the subsequent addition signals 602 and 603. The D-type flip-flop 714 receives the output signal of the exclusive OR gate 707 and latches the signal by using clock pulses having an interval of a period of B. In this way, the bi-phase mark is decoded.

Furthermore, a frequency divider 606 outputs a pulse signal 606 having an interval of B/2. A delay device 708 receives the pulse signal 606 and outputs a delayed pulse signal 607. The rising edge of the pulse signal 607 is present at the center of the period of B/2.

An AND gate 709 ANDs the addition signal 602 and the pulse signal 607. In other words, the reproduction signal 607 from the portion 602 (the portion having pre-pits) wherein the level of the addition signal (analog signal) is not more than a constant value is eliminated. A pulse signal 608 to be output lacks pulses of the portion having pre-pits.

A D-type flip-flop 710 receives the difference signal 605 at its data input terminal D and receives the pulse signal 608 at its clock input terminal CLK.

Preferably, the difference signal 605 is passed through an AND circuit (not shown) so as to be ANDed with a window signal (a signal for designating an area wherein data formed by degrading the recording film is recorded) generated by the output signal of the start pit and the output signal of the frequency divider. Hence, it is possible to eliminate unnecessary noise.

The D-type flip-flop 710 outputs the difference signal for the portion having no pre-pit. The waveform of the output signal thereof is shown in 609.

A shift register 711 receives the output signal of the D-type flip-flop 710 at its data input terminal D and receives the pulse signal 606 at its clock input terminal CLK. The shift register 711 outputs data 610 obtained by compensating for lacked data due to the presence of the pre-pits by using the preceding data.

The data 610 is decoded by a bi-phase mark decoder (including a delay device 712, an exclusive OR gate 713 and a D-type flip-flop 715; their schematic configurations are shown in FIG. 7).

The data 610 is delayed by a time of C/2 by the delay device 712 and exclusively ORed with the subsequent data 610 (713). The D-type flip-flop 715 receives the output signal of the exclusive OR gate 713 and latches the signal by using clock pulses having an interval of a period of C. In this way, the bi-phase mark is decoded.

By the above-mentioned method, the overwritten pre-pit data and the data formed of degraded recording film are separated and decoded.

### 〈〈Embodiment 3〉〉

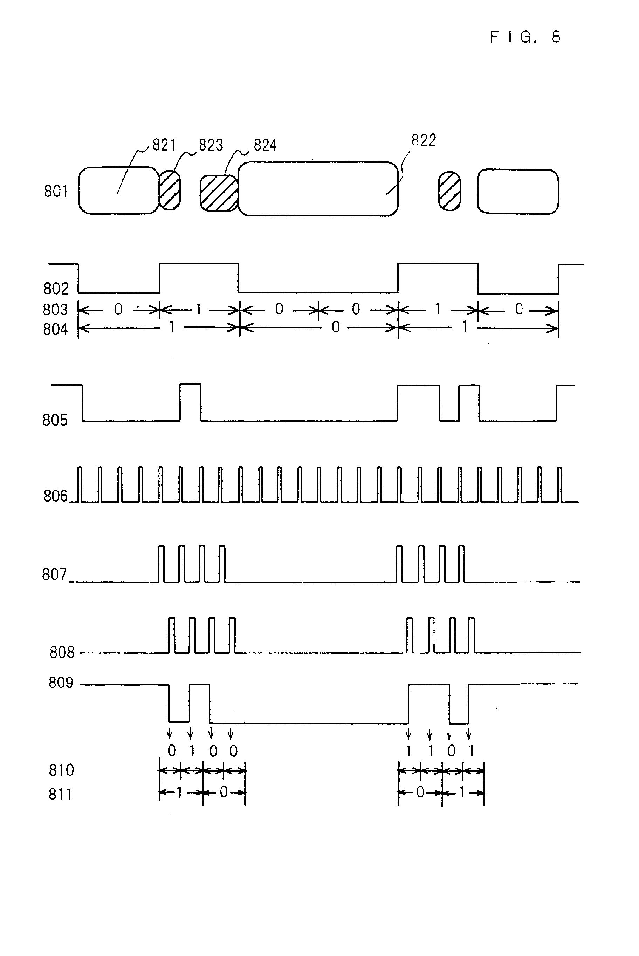

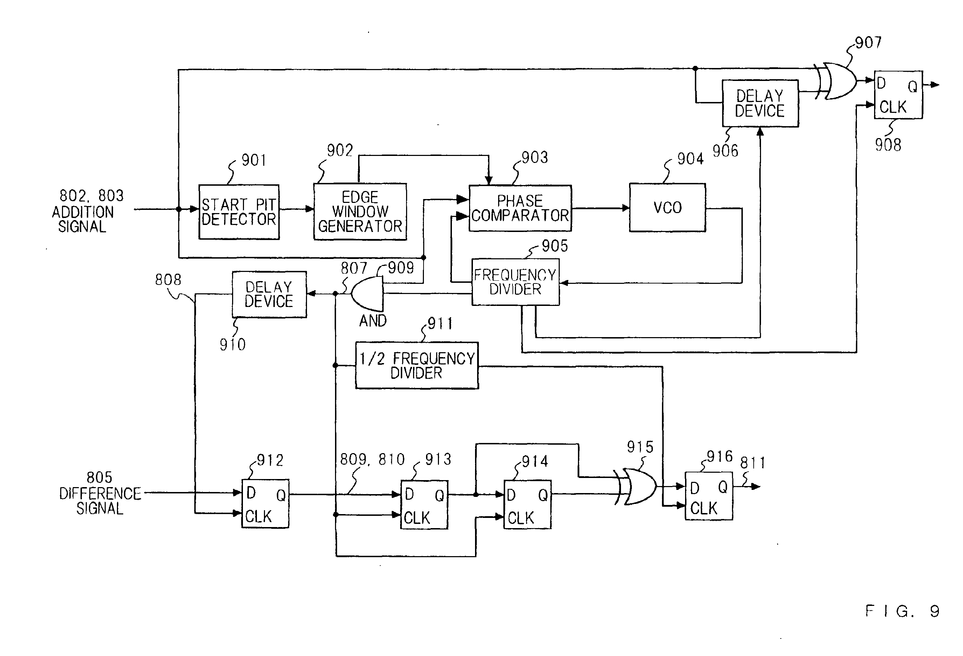

An optical disc and an optical disc reproducing apparatus (reproducing method) in accordance with Embodiment 3 will be described referring to FIG. 8 and FIG. 9.

The basic configuration of the optical disc in accordance with Embodiment 3 is the same as that of the optical disc in accordance with Embodiment 1. In the optical disc in accordance with Embodiment 1, data formed by degrading the recording film (the recording film has lost its vertical magnetic anisotropy) was provided in the second reproduction-only data area 116 and the third reproduction-only data area 117 having no pre-pit.

On the other hand, in the optical disc in accordance with Embodiment 3, data formed by degrading the recording film is overwritten in the data area provided width pre-pits (the first reproduction-only data area and areas provided with start pits, wobble pits and address pits (the areas may be positioned in either the preformatted data area 111 or the ordinary data area 113)).

In the optical disc in accordance with Embodiment 2, the mark length of each piece of data formed of degraded recording film is longer than the mark length of each piece of data formed of pre-pits.

In the optical disc in accordance with Embodiment 3, the mark length of each piece of data formed of pre-pits is longer than the mark length of each piece of data formed of degraded recording film.

The above-mentioned special portions of the optical disc and the optical disc reproducing apparatus (reproducing method) in accordance with Embodiment 3 will be described below. The same components as those of Embodiment 1 are not explained.

In FIG. 8, numeral 801 shows part of a recording pattern on the optical disc in accordance with Embodiment 3, wherein data 821 and 822 formed of pre-pits are overwritten with data 823 and 824 formed of degraded recording film.

In 801, the data formed of pre-pits and the data formed of degraded recording film are respectively encoded in conformity with the phase encoding system and recorded.

When it is assumed that the mark length of 1 bit data of the data formed of degraded recording film is D, the portion 823 formed of a short degraded recording film has a length of D/2, and the portion 824 formed of a long degraded recording film has a length of D.

When it is assumed that the mark length (the length per bit) of 1 bit data of the data formed of pre-pits is E, the short pre-pit 821 has a length of E/2, and the long pre-pit 822 has a length of E.

However, in the optical disc in accordance with Embodiment 3, since the portion wherein data formed of degraded recording film is recorded is limited to a portion having no pre-pit, the amount of data formed of degraded recording film and recorded in a preformatted data area having a constant length changes depending on the value of pre-pit data.

An addition signal (digital signal) 802 obtained by adding the output signals of the two light components split by the splitter corresponds to the output signal of the binarizing device 207 of FIG. 2. Hence, the addition signal 802 becomes an output signal corresponding to pre-pits, regardless of whether the recording film is degraded or not. The value of the addition signal in units of E/2 is shown in 803. By decoding this, the original signal 804 is obtained.

A difference signal 805 obtained by subtracting the output signals of the two light components split by the splitter corresponds to the output signal of the binarizing device 208 of FIG. 2.

A method for obtaining the original data 811 on the basis of the difference signal 805 will be described referring to FIG. 9 showing the optical disc reproducing apparatus in accordance with Embodiment 3.

In Embodiment 3, like the preformatted data area 111, the ordinary data area 113 is divided into 1280 segments. Each segment has a data area and a control area 114 similar to the preformatted data area 111. Hence, the control area 114 has a start pit, two wobble pits and an address pit.

FIG. 9 shows a schematic configuration of the optical disc and the optical disc reproducing apparatus in accordance with Embodiment.3. The configuration of the optical disc reproducing apparatus in accordance with Embodiment 3 of FIG. 9 is very similar to that of the optical disc reproducing apparatus in accordance with Embodiment 2 of FIG. 7, except for some of clocks.

In FIG. 9, the addition signal 802 is input to a start pit detector 901. The start pit detector 901 detects the start pit of each segment by using a method similar to that of Embodiment 1 and outputs the output signal of the start pit.

The output signal of the start pit is input to an edge window generator 902. The edge window generator 902 generates a window signal including the rising edge of the start pit and outputs the signal.

The output signal of a voltage-controlled oscillator (VCO) 904 is input to a frequency divider 905.

The frequency divider 905 outputs a first frequency division signal obtained by dividing the frequency of the output signal of the VCO 904.

A phase comparator 903 compares the addition signal (digital signal) 802 with the first frequency division signal with respect to phase in the window output from the edge window generator 902 and outputs an error signal.

The error signal is fed back to the VCO 904.

The above-mentioned configuration is the same as that of Embodiment 1 (FIG. 2).

The addition signals 802 and 803 are ANDed (not shown) with the window signal of the pre-pit data generated by the output signal of the start pit and the output signal of the frequency divider and then decoded by a bi-phase mark decoder (including a delay device 906, an exclusive OR gate 907 and a D-type flip-flop 908; their schematic configurations are shown in FIG. 9).

The addition signals 802 and 803 are delayed by a time of E/2 by the delay device 906 and exclusively ORed (907) with the subsequent addition signals 802 and 803. The D-type flip-flop 908 receives the output signal of the exclusive OR gate 907 and latches the signal by using clock pulses having an interval of a period of E. In this way, the bi-phase mark is decoded.

Furthermore, a frequency divider 905 outputs pulse signal 806 having an interval of D/2.

An AND gate 909 ANDs the addition signal 802 and the pulse signal 806. In other words, the reproduction signal 806 from the portion 802 (the portion having pre-pits) wherein the level of the addition signal (analog signal) is not more than a constant value is eliminated. A pulse signal 807 to be output lacks pulses of the portion having pre-pits.

The delay device 708 receives the pulse signal 807 and outputs a delayed pulse signal 808. The rising edge of the pulse signal 808 is present at the center of the period of D/2.

A D-type flip-flop 912 receives the difference signal 805 at its data input terminal D and receives the pulse signal 808 at its clock input terminal CLK.

Preferably, the difference signal 805 is passed through an AND circuit (not shown) so as to be ANDed with a window signal (a signal for designating an area wherein data formed by degrading the recording film is recorded) generated by the output signal of the start pit and the output signal of the frequency divider. Hence, it is possible to eliminate unnecessary noise.

The D-type flip-flop 912 outputs the difference signal for the portion having no pre-pit. The waveform of the output signal thereof is shown in 809.

The D-type flip-flops 913 and 914 constitute a shift register. The D-type flip-flops 913 and 914 receive the output signals (Q) of the D-type flip-flops 912 and 913 at their data input terminals D and receive the pulse signal 807 (having an interval of D/2) at their clock input terminals CLK. The D-type flip-flops 913 and 914 output data 809 for portions having no pre-pit.

A 1/2 frequency divider 911 receives the pulse signal 807 and divides its frequency into 1/2. The frequency division signal is input to the clock input terminal of a D-type flip-flop 916.

Two consecutive pieces of data 809 having a difference of 1 clock (a period of D/2) therebetween pass through an exclusive OR gate 915. The D-type flip-flop 916 latches the output signal of the exclusive OR gate 915 by using the output signal of the 1/2 frequency divider 911 as a clock. In this way, the bi-phase mark, that is, data formed of degraded recording film is decoded.

By the above-mentioned method, the overwritten pre-pit data and the data formed of degraded recording film are separated and decoded.

### 〈〈Embodiment 4〉〉

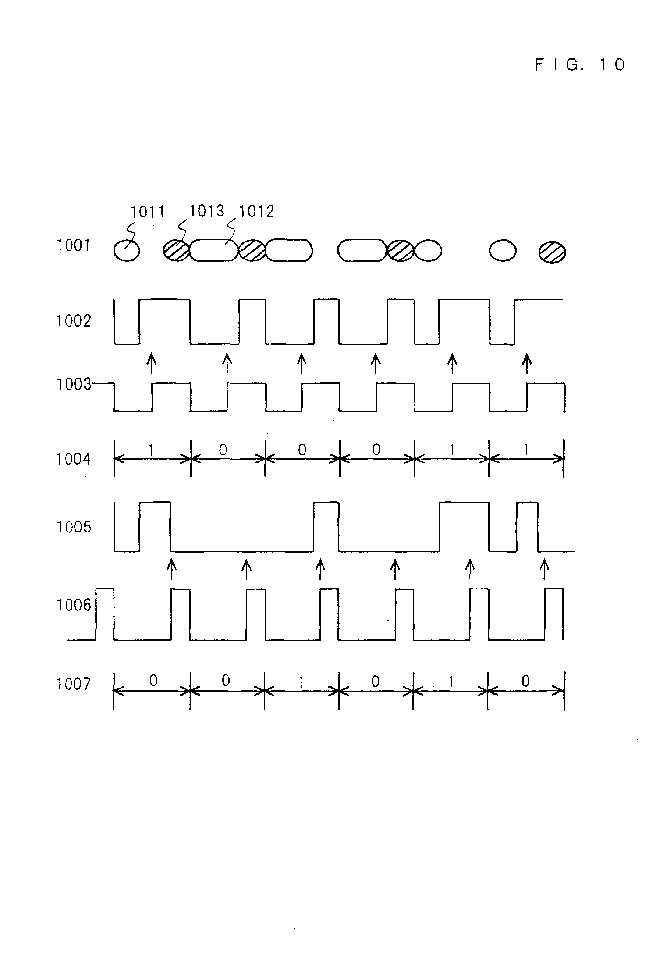

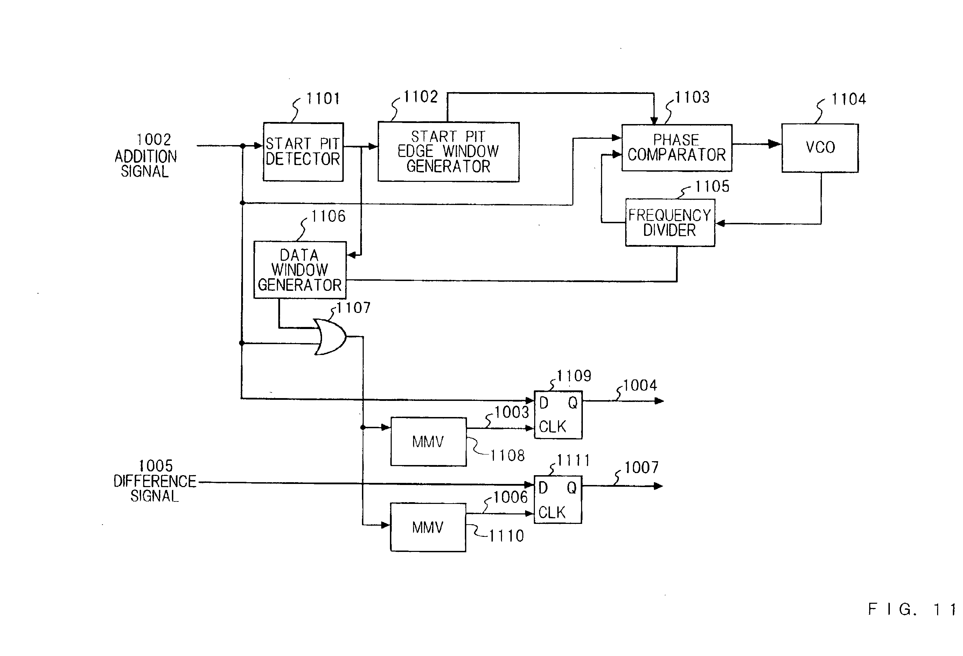

An optical disc and an optical disc reproducing apparatus (reproducing method) in accordance with Embodiment 4 will be described referring to FIG. 10 and FIG. 11.

The basic configuration of the optical disc in accordance with Embodiment 4 is the same as that of the optical disc in accordance with Embodiment 1. In the optical disc in accordance with Embodiment 1, preformatted data is encoded in conformity with the phase encoding system and recorded, and data formed by degrading mark recording film was provided in the second reproduction-only data area 116 and the third reproduction-only data area 117 having no pre-pit.

On the other hand, in the optical disc in accordance with Embodiment 4, pre-pit data is recorded in conformity with the phase encoding system (see FIG. 4), and data (encoded in conformity with the 0 or 1 RZ coding system) formed of degraded recording film (the recording film has lost its vertical magnetic anisotropy) is overwritten in the data area provided width pre-pits (the first reproduction-only data area and areas provided with start pits, wobble pits and address pits (the areas may be positioned in either the preformatted data area 111 or the ordinary data area 113)).

The above-mentioned special portions of the optical disc and the optical disc reproducing apparatus (reproducing method) in accordance with Embodiment 4 will be described below. The same components as those of Embodiment 1 are not explained.

In FIG. 10, numeral 1001 shows part of a recording pattern on the optical disc in accordance with Embodiment 4, wherein data 1011 and 1012 formed of pre-pits are overwritten with data 1013 formed of degraded recording film.

In 1001, the data formed of pre-pits is encoded in conformity with the phase modulation system, and the data formed of degraded recording film is encoded in conformity with the RZ coding system.

When it is assumed that the mark length (the length per bit) of 1 bit data of the data formed of pre-pits is E, the short pre-pit 1011 has a length of F/3, and the long pre-pit 1012 has a length of 2F/3.

The data 1013 formed of degraded recording film has a length of F/3.

An addition signal (digital signal) 1002 obtained by adding the output signals of the two light components split by the splitter corresponds to the output signal of the binarizing device 207 of FIG. 2. Hence, the addition signal 1002 becomes an output signal corresponding to pre-pits, regardless of whether the recording film is degraded or not.

A difference signal 1005 obtained by subtracting the output signals of the two light components split by the splitter corresponds to the output signal of the binarizing device 208 of FIG. 2.

In Embodiment 4, like the preformatted data area 111, the ordinary data area 113 is divided into 1280 segments. Each segment has a data area and a control area 114 similar to the preformatted data area 111. Hence, the control area 114 has a start pit, two wobble pits and an address pit.

FIG. 11 shows a schematic configuration of the optical disc reproducing apparatus in accordance with Embodiment 4.

In FIG. 11, the addition signal 1002 is input to a start pit detector 1001. The start pit detector 1101 detects the start pit of each segment by using a method similar to that of Embodiment 1 and outputs the output signal of the start pit.

The output signal of the start pit is input to an edge window generator 1102. The edge window generator 1102 generates a window signal including the rising edge of the start pit and outputs the signal.

The output signal of a voltage-controlled oscillator (VCO) 1104 is input to a frequency divider 1105.

The frequency divider 1105 outputs a first frequency division signal obtained by dividing the frequency of the output signal of the VCO 1104.

A phase comparator 1103 compares the addition signal (digital signal) 1102 with the first frequency division signal with respect to phase in the window output from the edge window generator 1102 and outputs an error signal.
The error signal is fed back to the VCO 1104.

The above-mentioned configuration is the same as that of Embodiment 1 (FIG. 2).

A data window generator 1106 receives the output signal of the start pit and the output signal of the frequency divider and generates a window signal indicating a period wherein pre-pit data and data formed of degraded recording film are present.

An OR gate 1107 receives a window signal indicating the period wherein pre-pit data and data formed of degraded recording film are present, also receives the addition signal 1002 and outputs an OR signal.

The OR signal outputs data being effective only in a period wherein data is present, and the OR signal is fixed at a high level in a period wherein data is not present.

As a result, the falling edge of the OR signal coincides with the falling edge of the phase-modulated pre-pit.

The OR signal is input to two monostable multivibrators (MMVs) 1108 and 1110.

The monostable multivibrator (MMV) 1108 is driven by the falling edge of the OR signal and outputs an F/2 delayed pulse signal 1003.

A D-type flip-flop 1109 receives the addition signal 1002 at its data input terminal D and receives the output signal of the monostable multivibrator 1108 at its clock input terminal CLK. The D-type flip-flop 1109 outputs an output signal 1004.

This is the decoded signal of the pre-pit data.

Similarly, the monostable multivibrator (MMV) 1110 is driven by the falling edge of the OR signal and outputs a 5F/6 delayed pulse signal 1006.

A D-type flip-flop 1111 receives the difference signal 1005 at its data input terminal D and receives the output signal of the monostable multivibrator 1110 at its clock input terminal CLK. The D-type flip-flop 1111 outputs an output signal 1007.

This is the decoded signal of the data recorded by degrading the recording film.

The data recorded by degrading the recording film is data obtained by only carrying out RZ coding; hence, by additionally degrading part of the normal portion at a later time, preformatted data can easily be changed. Therefore, it is preferable that other means for making the change difficult by adding ECC or the like are used.

### 〈〈Embodiment 5〉〉

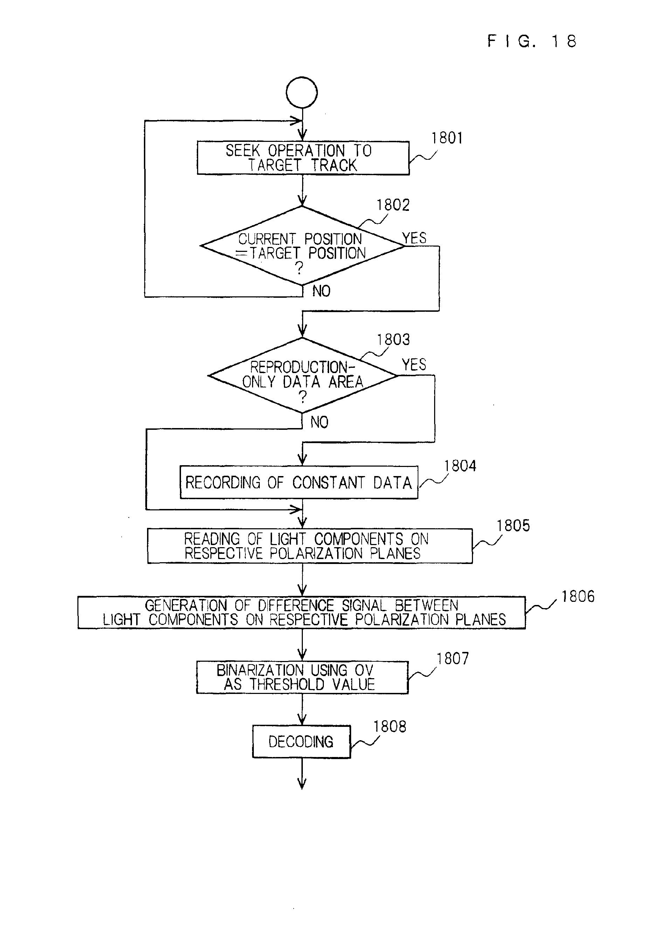

FIG. 18 is a flowchart showing an optical disc reproducing method in accordance with Embodiment 5.

The reproducing method in accordance with Embodiment 5 is applicable to the optical disc in accordance with any of the above-mentioned embodiments.

FIG. 18 is characterized in that the method for reproducing a data area formed by degrading part of the recording film (the recording film has lost its vertical magnetic anisotropy) is different from the method for reproducing an ordinary data area that can be recorded and reproduced by the users.

However, since pre-pit data is reproduced by the same method as the above-mentioned method, the method is not described herein.

First, the optical pickup carries out seek operation to a target track (step 1801).

Next, a check is carried out to determine whether the current position of the optical pickup is at the target position or not (whether the optical pickup has reached the target position or not) (step 1802).

At step 1802, if the current position of the optical pickup is not at the target position, the procedure returns to step 1801, and the seek operation continues.

At step 1802, if the current position of the optical pickup is at the target position, the procedure advances to step 1803.

At step 1803, a check is carried out to determine whether the current position is in the reproduction-only data area or not (whether the current position is in the data area formed by degrading part of the recording film or not).

At step 1803, if the current position is in the reproduction-only data area, the procedure advances to step 1804; if the current position is not in the reproduction-only data area (the area for ordinary recording and reproduction), the procedure advances to step 1805.

If the current position is not in the reproduction-only data area (the area for ordinary recording and reproduction), data is reproduced by the ordinary reproducing method. In other words, at step 1805, the light components on the two polarization planes are read.

Next, the difference signal between the light components on the polarization planes are generated (step 1806).

Next, the DC component of the difference signal is cut by using a capacitor, for example, and the minimum value of the difference signal is clamped at a constant negative value, and then the difference signal is binarized by using 0 V as a threshold value (converted into a digital signal) (step 1807).

In the end, the binarized data is decoded (step 1808).

At step 1803, if the current position is in the reproduction-only data area, the procedure advances to step 1804, and constant data (preferably data being wholly 0 or 1) is recorded in the entire data area. Embodiment 5 is characterized in that constant data is recorded during reproduction.

Data formed by degrading part of the recording film can be reproduced only after the other normal portions have been magnetized. If the other normal positions have not been magnetized, reading is impossible.

After the constant data is recorded at step 1804 (in other words, after the recording film is magnetized in a constant direction), the data formed by degrading part of the recording film can be read securely.

By cutting the DC component of the difference signal by using a capacitor, for example, and by clamping the minimum value of the difference signal at a constant negative value, the reproduction of the ordinary data formed by magnetizing the recording film and the reproduction of the data formed by degrading part of the recording film can be carried out by using the same binarizing devices (the binarizing device 208 and the binarizing device 209 shown in FIG. 2 can be combined into one binarizing device).

Even if data has been overwritten on the normal portions in the reproduction-only area by the ordinary method (for example, in the case when an attempt to change the data is made by a simple method), the data having been written by the ordinary method can be eliminated as shown in 303 of FIG. 3; furthermore, by recording the constant data in the entire data area during reproduction, such changed data can be erased securely, whereby data reading can be carried out securely and accurately.

With the present invention, it is possible to obtain an advantageous effect capable of attaining an optical disc wherein predetermined information has been recorded at high density in the recording areas of narrow tracks by degrading the characteristics of the recording film by using high-power laser light for each disc. Since it is difficult to carry out the above-mentioned degrading of the recording film by using a general disc apparatus, it is possible to attain an optical disc that is difficult to duplicate. With the present invention, it is possible to obtain an advantageous effect capable of attaining an optical disc that can be identified one by one and can add a copyright protection function by recording a predetermined unique information in the preformatted recording areas of the narrow tracks of each disc by degrading the characteristics of the recording film.

With the present invention, it is possible to obtain an advantageous effect capable of attaining an optical disc wherein data formed of pre-pits and data on the basis of the magnitude of the polarizing angle of reflected light are mixed in one recording area as data that cannot be rewritten by the user without authorization, for example.

With the present invention, it is possible to obtain an advantageous effect capable of attaining an optical disc having a small recording area for recording data that cannot be rewritten by the user and having a wide recording area in which the user can carry out recording and reproducing as desired, for example.

With the present invention, it is possible to attain an optical disc for recording data formed of means other than pre-pits in an area disposed between pre-pit areas adjacent thereto, for example.

With the present invention, it is possible to obtain an advantageous effect capable of attaining an optical disc that can record large amount of data in a constant recording area by recording data formed of pre-pits over data formed of means other than pre-pits in one area.

With the present invention, it is possible to obtain an advantageous effect capable of attaining an optical disc that can record data at high density in comparison with the conventional method for recording data by providing portions obtained by destroying the recording film.

With the present invention, it is possible to obtain an advantageous effect capable of attaining . an optical disc that can control the optical pickup in the ordinary data recording area and the preformatted data recording area by using the same control method.

With the present invention, it is possible to obtain an advantageous effect capable of attaining an optical disc recording apparatus that can produce an optical disc having high recording density as described above.

By applying the present invention to a step for writing the serial number of an optical disc in a production process, for example, it is possible to obtain an advantageous effect capable of attaining an optical disc producing method that can produce an optical disc having high density.

With the present invention, it is possible to obtain an advantageous effect capable of attaining an optical disc reproducing apparatus that can read data recorded on the above-mentioned optical disc.

With the present invention, it is possible to obtain an advantageous effect capable of obtaining a highly reliable reproduction signal even when an optical disc having a pre-pit area overlaid on a data area having recorded data formed of means other than pre-pits is reproduced, for example.

With the present invention, it is possible to obtain an advantageous effect capable of attaining an optical disc reproducing apparatus that can use a copy guard and the release of the copy guard function.

With the present invention, it is possible to obtain an advantageous effect capable of attaining an optical disc reproducing apparatus wherein, when data formed of portions lacking vertical magnetic anisotropy and normal portions is reproduced, constant data is recorded once in the area in which the data has been recorded, whereby the data based on the absolute value of the difference signal of the light components on the polarization planes can be reproduced easily and securely.

Although the present invention has been described with respect to its preferred embodiments in some detail, the disclosed contents of the preferred embodiments may change in the details of the structure thereof, and any changes in the combination and sequence of the components may be attained without departing from the scope and spirit of the claimed invention.

### INDUSTRIAL APPLICABILITY

The present invention is useful for an optical disc for recording various information, a recording apparatus therefor, a reproducing apparatus therefor, a reproducing method therefor and a producing method therefor.

## Claims

1. An optical disc having one or plural tracks disposed spirally or on concentric circles, wherein
said track has first pre-pit areas or groove portions or inter-groove portions for control and also has a preformatted data recording area for recording preformatted data, and
said preformatted data recording area has preformatted data formed of means other than pre-pits.

2. An optical disc in accordance with claim 1, wherein said track has segments divided into a plurality of areas,
said segment has said first pre-pit area and preformatted data recording area for recording preformatted data,
said first pre-pit area has a pair of wobble pits disposed so as to be displaced to the left and right from the longitudinal direction of said track and at different positions in the longitudinal direction thereof.

3. An optical disc in accordance with claim 1, wherein said preformatted data area includes second pre-pit areas for recording preformatted data formed of pre-pits other than pre-pits for control and areas for recording preformatted data formed of means other than pre-pits, and at least one of said second pre-pit areas is adjacent to said areas for recording preformatted data formed of means other than pre-pits in the longitudinal direction of said preformatted data area.

4. An optical disc in accordance with claim 1, wherein said preformatted data formed of means other than pre-pits is preformatted data formed of portions wherein the recording film has ordinary magnetic anisotropy and portions wherein the recording film has magnetic anisotropy smaller than the ordinary magnetic anisotropy.

5. An optical disc in accordance with claim 2, wherein another said segment further has a third pre-pit area and a data recording area for writing data, and said third pre-pit area has the same structure as that of said first pre-pit area.

6. An optical disc in accordance with claim 3, wherein at least two areas disposed between said second pre-pit areas being adjacent thereto have different lengths, and said area for recording preformatted data formed of means other than pre-pits is provided at least in the area having the longest length and disposed between said second pre-pit areas being adjacent thereto.

7. An optical disc in accordance with claim 1, wherein said preformatted data area has preformatted data formed of pre-pits and preformatted data formed of means other than pre-pits, and
at least part of the area having said preformatted data formed of pre-pits is overlapped with the area having said preformatted data formed of means other than pre-pits.

8. An optical disc in accordance with claim 3 or claim 4, wherein said preformatted data formed of means other than pre-pits is recorded in portions not provided with pre-pits in said area having data formed of pre-pits.

9. An optical disc in accordance with claim 3 or claim 4, wherein the mark length of each piece of said preformatted data formed of pre-pits is different from the mark length of each piece of said preformatted data formed of means other than pre-pits.

10. An optical disc in accordance with claim 1, wherein said preformatted data area is provided in the vicinity of at least one of the inner circumferential side and the outer circumferential side of said optical disc and has at least one- turn length of said optical disc.

11. An optical disc in accordance with claim 1, wherein said preformatted data formed of means other than pre-pits includes information unique to said optical disc.

12. An optical disc in accordance with claim 1, wherein an area for recording said preformatted data formed of means other than pre-pits comprises only recording film having magnetic anisotropy smaller than that of the recording film of an ordinary data recording area.

13. An optical disc in accordance with claim 3, wherein said preformatted data formed of means other than pre-pits is data conforming to the phase encoding system.

14. An optical disc in accordance with claim 3, wherein said preformatted data formed of pre-pits is data conforming to the phase modulation system.

15. A recording apparatus for an optical disc having one or plural tracks disposed spirally or on concentric circles, comprising:
a control section for applying laser light to wobble pits, grooves or inter-grooves formed in said optical disc and for carrying out the phase control or tracking control of an optical pickup on the basis of the amount of reflected light, and
a recording section for recording information on said tracks by applying laser light while carrying out the phase control or tracking control of said optical pickup using said control section, thereby degrading the recording film of said optical disc to the extent that reflected light is obtained therefrom and magnetic anisotropy becomes smaller than ordinary magnetic anisotropy.

16. An optical disc recording apparatus in accordance with claim 15, wherein the intensity of said laser light for degrading the recording film is intensity capable of raising the temperature of said recording film to 680°C or more and 1300°C or less.

17. An optical disc producing method comprising an optical disc substrate forming step for forming an optical disc substrate having pre-pits or grooves for control,
a recording film forming step for forming a recording film on said optical disc substrate, and
a recording step of recording information by applying laser light, thereby degrading the recording film of said optical disc to the extent that magnetic anisotropy becomes smaller than ordinary magnetic anisotropy while applying laser light to wobble pits, grooves or inter-grooves formed in said optical disc and carrying out the phase control or tracking control of an optical pickup on the basis of the amount of the reflected light thereof.

18. An optical disc producing method in accordance with claim 17, wherein the intensity of said laser light for degrading said recording film is intensity capable of raising the temperature of said recording film to 680°C or more and 1300°C or less.

19. An optical disc producing method in accordance with claim 17, wherein information unique to said optical disc is recorded at said recording step.

20. An optical disc producing method in accordance with claim 17, wherein data formed of pre-pits is further recorded at said optical disc substrate forming step.

21. An optical disc reproducing apparatus comprising:
a splitter for splitting reflected light from an optical disc into two polarization-plane light components different from each other,
polarized light component detection sections for detecting said two polarization-plane light components different from each other and for outputting two detection signals,
a difference detection section for receiving said two detection signals and for outputting the difference therebetween, and
binarizing device for binarizing the absolute value of said difference on the basis of a threshold value in a condition that the level of the addition signal of said two detection signals is a constant value or more or in a condition of being within the period of a window signal generated on the basis of a reproduction signal of pre-pits.

22. An optical disc reproducing apparatus in accordance with claim 21, further comprising a light amount detection section for outputting the addition signal of said two detection signals.

23. An optical disc reproducing apparatus in accordance with claim 22, comprising a window signal generating section for generating a window signal based on that the output level of said addition signal is a constant value or more, and
a selecting section for selecting an effective difference by using said window signal.

24. An optical disc reproducing apparatus in accordance with claim 21, further comprising a decoder conforming to the phase encoding system for receiving and decoding the output signals of said binarizing device.

25. An optical disc reproducing apparatus in accordance with claim 21, further comprising a copy guard section for releasing a copy guard if all the output signals of said binarizing device, based on reflected light from a specific area on an optical disc, are not more than said constant threshold value.

26. An optical disc reproducing apparatus in accordance with claim 21, further comprising a control section for carrying out the phase control or tracking control of an optical pickup on the basis of said addition signal, wherein said binarizing device outputs data while said control section controls said optical pickup.

27. An optical disc reproducing method comprising:
a splitting step for splitting reflected light from an optical disc into two polarization-plane light components different from each other and for detecting said respective light components,
a difference detecting step for outputting difference between said two light components detected, and
a binarizing step for binarizing the absolute value of said difference on the basis of a threshold value in a condition that the level of the addition signal of said two detection signals is a constant value or more or in a condition of being within the period of a window signal generated on the basis of a reproduction signal of pre-pits.

28. An optical disc reproducing method in accordance with claim 27, further comprising a step for releasing a copy guard in the case when all the output signals at said binarizing step, based on reflected light from a specific area on an optical disc, are not more than said constant threshold value.

29. An optical disc reproducing method in accordance with claim 27, further comprising:
a writing step of writing constant data on an optical disc, wherein
reflected light from a portion wherein said data has been written at said writing step is received and split into two polarization-plane light components different from each other, and said respective light components are detected at said splitting step.

30. An optical disc reproducing method in accordance with claim 27, further comprising a light amount detecting step for outputting the addition signal of said two detection signals.

31. An optical disc reproducing method in accordance with claim 30, comprising:
a window signal generating step for generating a window signal based on that the output level of said addition signal is a constant value or more, and
a selecting step for selecting an effective difference by using said window signal.

32. An optical disc reproducing method in accordance with claim 27, further comprising:
a tracking control step for carrying out the phase control or tracking control of an optical pickup on the basis of said addition signal, wherein
data is output at said binarizing step while the phase control or tracking control of said optical pickup is carried out at said tracking control step.
